# EUROPEAN PATENT SPECIFICATION

(11) **EP 2 802 098 B1**
(45) Date of publication and mention of the grant of the patent: **05.07.2017**
(21) Application number: 13735633.3
(22) Date of filing: 10.01.2013
(51) Int. Cl.: H04L 12/811

(54) **TRANSMISSION METHOD, DEVICE AND SYSTEM FOR TRAFFIC INDICATION MESSAGE**
ÜBERTRAGUNGSVERFAHREN, -VORRICHTUNG UND -SYSTEM FÜR VERKEHRSANZEIGENACHRICHTEN
PROCÉDÉ, DISPOSITIF ET SYSTÈME DE TRANSMISSION DESTINÉS À UN MESSAGE D'INDICATION DE TRAFIC

(30) Priority: 11.01.2012 CN 201210008652
(43) Date of publication of application: 12.11.2014
(73) Proprietor: Huawei Device Co., Ltd., Longgang District Shenzhen Guangdong 518129 (CN)
(72) Inventor: FANG, Ping, Shenzhen Guangdong 518129 (CN); DING, Zhiming, Shenzhen Guangdong 518129 (CN); SHU, Guiming, Shenzhen Guangdong 518129 (CN); LUO, Yi, Shenzhen Guangdong 518129 (CN)
(74) Representative: Pfenning, Meinig & Partner mbB
(86) International application number: PCT/CN2013/070297
(87) International publication number: WO 2013/104319

(56) References cited:
- EP-A1- 1 684 465
- CN-A- 1 809 007
- CN-A- 1 947 443
- US-A1- 2005 276 237
- US-A1- 2007 248 034
- BRENT A MYERS ET AL: "Design Considerations for Minimal-Power Wireless Spread Spectrum Circuits and Systems", PROCEEDINGS OF THE IEEE, IEEE. NEW YORK, US, vol. 88, no. 10, 1 October 2000 (2000-10-01), XP011044436, ISSN: 0018-9219
- ZHOU ET AL: "Extension of AID and TIM to Support 6000 STAs in 802.11ah", IEEE 802.11-11/1550R1,, 8 November 2011 (2011-11-08), pages 1-9, XP003031954,

## Description

### TECHNICAL FIELD

The present invention relates to a WiFi (Wireless Fidelity, wireless fidelity) technology, and in particular, to a method, an apparatus, and a system for transmitting a group traffic indication message.

### BACKGROUND

As a short-range wireless communications technology, the WiFi technology has gained wide application in wireless local area network construction and wide area network access due to its advantages such as convenient use and a high transmission rate. Nowadays, many public places such as airport lounges and coffee shops are equipped with APs (Access Point, access point) for WiFi.

In a WiFi wireless network, when a STA (Station, a terminal device supporting 802.11 protocols) accesses the network, the STA needs to establish association with an AP first, and the AP assigns an AID (Association ID, association ID) to the STA. After that, the AP periodically broadcasts a beacon (beacon) frame which includes a TIM (Traffic Indication Message, traffic indication message), and the TIM carries identifiers which indicate whether all STAs associated with the AP have data to deliver. The identifier is used to notify the STA of whether the STA has data to receive. By periodically receiving a Beacon message, the STA obtains a value of a bit (bit) corresponding to the AID of the STA in a bitmap (bitmap) of the TIM message, and thereby determines whether the STA has data to receive; if the value is 1, it indicates that the STA has data to receive; and if the value is 0, it indicates that the STA has no data to receive. If the STA has data to receive, the STA requests the AP to transmit the data or waits for the AP to transmit the data; and if the STA has no data to receive, the STA may enter a power-saving mode and wakes up at the moment when a next Beacon is transmitted to receive the next Beacon.

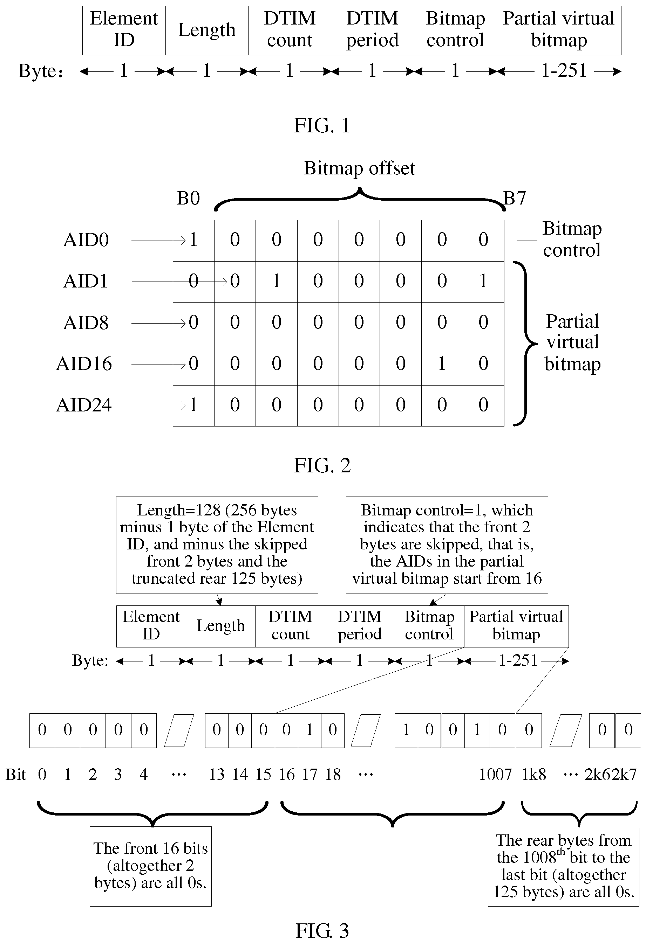

A format of the TIM message is shown in FIG. 1. TIM information may be used for indicating whether at most 2007 STAs have delivery traffic indication messages (DTIM, Delivery Traffic Indication Message). Definitions of the fields in FIG. 1 are as follows:
element ID (Element ID) indicates the type of a message;
message length (Length) indicates the length of a transmitted TIM message;
broadcast message count (DTIM Count) indicates how many Beacons are to be transmitted before a next DTIM, and 0 indicates that the TIM is a DTIM;
broadcast message period (DTIM Period) indicates the number of Beacons transmitted between two successive DTIMs; if all TIMs are DTIMs, the bit is set to 1, and the bit is never 0;
in bitmap control (Bitmap Control), B0 is a message indication bit for AIDO, and when the AP has broadcast data to transmit to all STAs, the bit is 1; otherwise, the bit is 0; B1 to B7 indicate bitmap offsets (Bitmap Offset); and
partial virtual bitmap (Partial Virtual Bitmap) indicates an indication bit which indicates whether each corresponding STA has data to transmit; if a STA has data to transmit, the bit is 1; otherwise, the bit is 0.

As shown in FIG. 2, bits in the Partial Virtual Bitmap are corresponding to AIDs, that is, corresponding to STAs. When a corresponding bit value is 1, it indicates that the AP has data to transmit to a corresponding STA. For example, when a bit value of AID2 is 1, it indicates that the AP has data to transmit to STA2. Among the AIDs, AID0 is reserved to indicate whether the AP has broadcast data to transmit to all the STAs. The AID0 is not assigned to any STA, that is, the bit B0 in the Bitmap Control indicates the AID0. The Bitmap Offset in the Bitmap Control is used to indicate how many successive bytes are 0 before a value 1 in the Partial Virtual Bitmap. As shown in FIG. 2, the STAs corresponding to AID2, AID7, AID22, and AID24 in the Partial Virtual Bitmap all have data to receive.

In the partial virtual bitmap, an AID corresponding to each STA takes up one bit. When a large number of 0s exist in the partial virtual bitmap, an existing compression method is to compress 0s in the front and 0s in the rear, that is, use both 7 bits from B1 to B7 in the Bitmap Control field and the Length field in the TIM message to compress the partial virtual bitmap. When bytes in the front of the partial virtual bitmap are 0s, the bytes may be skipped through indication of the Bitmap Control field. As the Bitmap Control field has a limited number of bits (namely, 7 bits), a value of the Bitmap Control field indicates the number of skipped doubt-bytes (namely, 16 bits). As for bytes which are 0s in the rear of the partial virtual bitmap, the bytes may be truncated by assigning a value to the Length field.

As shown in FIG. 3, in the partial virtual bitmap, the first 16 bits (altogether 2 bytes) are all 0s, and the rear bytes from the 1008^{th} bit to the last bit (altogether 125 bytes) are all 0s; therefore, B7 in the Bitmap Control field is 1, which indicates that 2 bytes are skipped. That is, the AIDs in the partial virtual bitmap start from 16, and the Length field is 128, because 256 bytes minus 1 byte of the Element ID is 255 bytes, and 255 bytes minus the skipped first 2 bytes and the truncated rear 125 bytes is 128 bytes. For the compression method in existing standards, if non-successive 1s appear in the middle of the partial virtual bitmap, for example, a bit corresponding to AID1 is 1, a bit corresponding to AID2007 is 1, and bits corresponding to AIDs between the two AIDs are all 0s, the compression cannot be implemented; therefore, a large number of bits are wasted.
A document by Brent A. Myers et. al., entitled "Design Considerations for Minimal-Power Wireless Spread Spectrum Circuits and Systems", discusses requirements and design tradeoffs encountered in the design of minimal-power WLAN systems. Particularly, in pages 13-14, paragraph E, this document discloses, "in a IEEE 802.11 BSS, the AP buffers broadcast and multicast frames, as well as unicast frames addressed to the stations that have indicated to the AP that they are operating in power save PS mode; each Beacon frame transmitted by the AP includes the Traffic Indication Map, TIM or DTIM, a compressed bit map that indicates which associated stations have buffered traffic."
Another document by Zhou et. al., entitled "Extension of AID TIM to support 6000 STAs in 802.11ah", discusses the issue of supporting the number of associations beyond 2007 for smart metering in an 802.11 ah network.
A third document (EP1684465A1) discloses an access point (102) isto transmit delivery traffic indication messages at different periods of beacon frames (200) for different wireless client devices (120, 122, 124, 126, 128, 130) associated with the access point. A cfient device (400) may store an indication of a preferred period of beacon frames (200) at which to listen to delivery traffic indication messages when in power save mode. The client device (400) may adjust its preferred period according to predefined considerations, for example a charge level of a battery (420) to power the client device (400) and/or an expected usage model for the client device (400). A client device (400) may negotiate its preferred period with the access point (102).
A fourth document (US2005/0276237A1) describes an access point (102) that conveys (202) to communisation units (104) of a plurality of multicast groups, a first indication that the access point supports a method for sending a multicast message. The access point receives (204) a multicast message directed to a receiving one of the plurality of multicast groups, and determines (206) that the communication units belonging to the receiving one of the plurality of multicast groups also support the method. The access point signals (208) a second indication to selectively awaken the communication units belonging to the receiving one of the plurality of multicast groups, and transmits (210) the multicast message to the receiving one of the plurality of multicast groups in a manner that allows (212) at least one communication unit not belonging to the receiving one of the plurality of multicast groups to remain asleep during the transmitting.

In the process of implementing the present invention, the inventor finds that a WiFi extension standard being formulated specifically requires that an AP supports 6000 STAs or more. However, in the prior art, a single AP supports only 2007 STAs at most. When the AP supports a large number of STAs, the TIM message may increase in length according to an existing TIM organization manner. Besides, the existing compression method may not be able to effectively compress the TIM, leading to an increase in the length of a Beacon.

### SUMMARY

Embodiments of the present invention provide a method, an apparatus, and a system for transmitting a traffic indication message, so as to implement effective compression of a TIM message, and reduce the length of the TIM message, thereby reducing the length of a Beacon, and increasing the transmission efficiency.

To fulfill the above objective, the embodiments of the present invention adopt the following technical solutions.

A method for transmitting a traffic indication message is provided, which includes:
compressing a delivery traffic indication message, and generating a traffic indication message, where the delivery traffic indication message is used for indicating whether at least one terminal device associated with an access point has data to receive, and the delivery traffic indication message indicates, through a delivery traffic indication bit corresponding to the at least one terminal device, whether the at least one terminal device has data to receive; and
transmitting the traffic indication message, where the traffic indication message includes compression method indication information and the compressed delivery traffic indication message, and the compression method indication information is used for indicating a compression method adopted to compress the delivery traffic indication message.

A method for receiving a traffic indication message is provided, which includes:
receiving, by a first terminal device, a traffic indication message, where the traffic indication message includes compression method indication information and a compressed delivery traffic indication message corresponding to at least one terminal device associated with an access point, the compression method indication information is used for indicating a compression method adopted to compress the delivery traffic indication message corresponding to the at least one terminal device, and the delivery traffic indication message indicates, through a delivery traffic indication bit, whether the at least one terminal device has data to receive; and
according to the compression method indicated by the compression method indication information in the received traffic indication message, decompressing the delivery traffic indication message in the received traffic indication message, and obtaining the delivery traffic indication bit corresponding to the first terminal device.

An access point is provided, which includes:
a compressing unit, configured to compress a delivery traffic indication message and generate a traffic indication message, where the delivery traffic indication message is used for indicating whether at least one terminal device associated with the access point has data to receive, and the delivery traffic indication message indicates, through a delivery traffic indication bit corresponding to the at least one terminal device, whether the at least one terminal device has data to receive; and
a transmitting unit, configured to transmit the traffic indication message, where the traffic indication message includes compression method indication information and the compressed delivery traffic indication message, and the compression method indication information is used for indicating a compression method adopted to compress the delivery traffic indication message.

A terminal device is provided, which includes:
a receiving unit, configured to receive a traffic indication message, where the traffic indication message includes compression method indication information and a compressed delivery traffic indication message corresponding to at least one terminal device associated with an access point, the compression method indication information is used for indicating a compression method adopted to compress the delivery traffic indication message corresponding to the at least one terminal device, and the delivery traffic indication message indicates, through a delivery traffic indication bit, whether the at least one terminal device has data to receive; and
a decompressing unit, configured to decompress, according to the compression method indicated by the compression method indication information in the received traffic indication message, the delivery traffic indication message in the received traffic indication message, and obtain the delivery traffic indication bit corresponding to the first terminal device.

A system for transmitting a traffic indication message is provided, which includes:
the access point and the terminal device.

The method, apparatus, and system for transmitting a traffic indication message provided by the embodiments of the present invention compress a delivery traffic indication message corresponding to each terminal device, generate the traffic indication message, and then transmit the traffic indication message, thereby solving the problem that the TIM message is too long, reducing the length of a Beacon frame, and increasing the transmission efficiency.

### BRIEF DESCRIPTION OF DRAWINGS

FIG. 1 is a schematic diagram of a format of a traffic indication message in the prior art;
FIG. 2 is a usage exemplary diagram of a bitmap in the prior art;
FIG. 3 is an exemplary diagram of a compression method in the prior art;
FIG. 4 is a flow chart of operation steps of a method for transmitting a traffic indication message provided by Embodiment 1 of the present invention;
FIG. 5 is an exemplary diagram of basic elements of a multi-block compression method provided by Embodiment 1 of the present invention;
FIG. 6 is an exemplary diagram of a format of a TIM message provided by Embodiment 1 of the present invention;
FIG. 7 is an exemplary diagram of a delivery traffic indication message before bit flipping provided by Embodiment 1 of the present invention;
FIG. 8 is a flow chart of operation steps of a method for receiving a traffic indication message provided by Embodiment 2 of the present invention;
FIG. 9 is an operation flow chart of a method for transmitting a traffic indication message adopted when an access point sequentially transmits a traffic indication message corresponding to at least one terminal device group provided by Embodiment 3 of the present invention;
FIG. 10 is a schematic diagram of a format of a first type of GTIM message in a method for transmitting a traffic indication message provided by Embodiment 3 of the present invention;
FIG. 11 is a schematic diagram of a format of a GTIM message when a multi-block compression method is adopted in a method for transmitting a traffic indication message provided by Embodiment 3 of the present invention;
FIG. 12 is an operation flow chart of a method for transmitting a traffic indication message adopted when an access point transmits a traffic indication message corresponding to all terminal device groups provided by Embodiment 3 of the present invention;
FIG. 13 is a schematic diagram of a format of a second type of GTIM message in a method for transmitting a traffic indication message provided by Embodiment 3 of the present invention;
FIG. 14 is a structural diagram of an access point provided by Embodiment 4 of the present invention;
FIG. 15 is a structural diagram of a compressing unit in an access point provided by Embodiment 4 of the present invention;
FIG. 16 is a structural diagram of a terminal device provided by Embodiment 4 of the present invention; and
FIG. 17 is a structural diagram of a system for transmitting a traffic indication message provided by Embodiment 4 of the present invention.

### DESCRIPTION OF EMBODIMENTS

The following describes a method, an apparatus, and a system for transmitting a traffic indication message provided by the embodiments of the present invention in detail with reference to the accompanying drawings.

### Embodiment 1

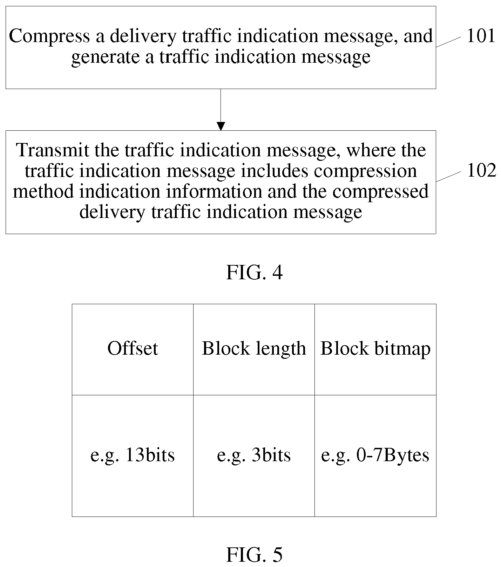

An embodiment of the present invention provides a method for transmitting a traffic indication message. As shown in FIG. 4, operation steps of an access point include:
101: Compress a delivery traffic indication message, and generate a traffic indication message, where the delivery traffic indication message is used for indicating whether at least one terminal device associated with the access point has data to receive, and the delivery traffic indication message indicates, through a delivery traffic indication bit corresponding to the at least one terminal device, whether the at least one terminal device has data to receive.
102: Transmit the traffic indication message, where the traffic indication message includes compression method indication information and the compressed delivery traffic indication message, and the compression method indication information is used for indicating a compression method adopted to compress the delivery traffic indication message.

The method for transmitting a traffic indication message provided by this embodiment of the present invention compresses a delivery traffic indication message corresponding to each terminal device, generates the traffic indication message, and then transmits the traffic indication message, thereby solving the problem that the TIM message is too long, reducing the length of a Beacon frame, and increasing the transmission efficiency.

In specific application, compressing the delivery traffic indication message specifically includes: encoding a bitmap of the delivery traffic indication bit. Different compression methods, namely, encoding methods, may be adopted for encoding the bitmaps; and the compression methods are indicated by the compression method indication information in the traffic indication message.

The following provides a multi-block solution for compressing a delivery traffic indication message. As shown in FIG. 5, basic elements of a multi-block definition include an offset, a block length, and a bitmap. Specific definitions are as follows:
offset (Offset) indicates an AID of a first terminal device of which an indication bit is 1 in a block and may occupy 13 bytes;
block length (Length) indicates the length of a block bitmap in the block; when the block length is 0, it indicates that there is no block bitmap information; therefore, the offset refers to only one AID; and the maximum block length is 7 bytes, which occupy 3 bits; and
block bitmap (Bitmap) indicates a partial bitmap of one block; the maximum length of the bitmap is 7 bytes, that is, one block indicates partial bitmaps of 56 terminal devices at most.

During the compressing of the TIM message, by using the multi-block solution the TIM is searched backwards, starting from AID1, for bits of which values are 1s; when the first 1 is found, a value of an AID corresponding to the first 1 is filled in the Offset of the basic elements; if multiple 1s appear within a range of several bytes (a range of 7 bytes at most) after the first 1 in the TIM, bitmaps including the several bytes of which values are 1s in the TIM are copied to a block bitmap, where the length (in bytes) of the block bitmap is indicated by the block length; and if no other 1s appear within the range of 7 bytes after the first 1, the block length is set to 0, which indicates that no bitmap exists after the first 1. In this way, the first basic element for compression is obtained; then, the above steps are continuously performed to search for the first 1 appearing afterwards, and the above steps are repeated until the searching and encoding of the whole TIM are completed. After the whole TIM is compressed, multiple basic elements are obtained.

When the compression method is adopted, the compression method needs to be indicated in the compression method indication information of the TIM message, so that when receiving the compressed TIM message, the STA may decompress the TIM message according to an algorithm indicated by the compression method indication information, so as to obtain a corresponding delivery traffic indication message. For example, when 3 bits are adopted to indicate the compression method indication information, 000 may indicate adopting the existing method of compressing 0s in the front and rear; 001 may indicate adopting the multi-block compression algorithm, and so on. Certainly, other compression algorithms may also be adopted to compress the TIM, and are indicated by the compression method indication information.

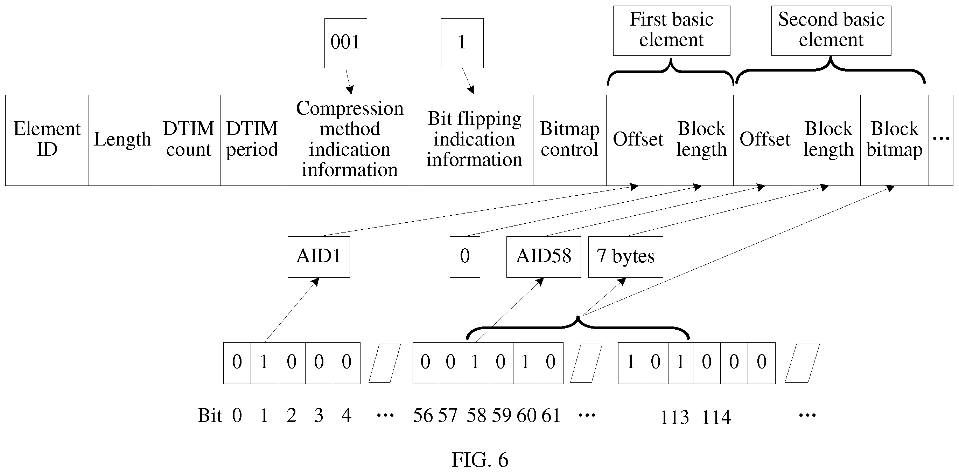

For example, as shown in FIG. 6, when the compression method indication information is 001, which indicates adopting the multi-block compression algorithm, a value of the AID1 in the TIM message is 1, and no other 1s appear within 7 bytes after the 1; therefore, the block length is set to 0, which indicates that no bitmap exists after the 1. In this way, the first basic element for compression is obtained. When a value of AID58 is 1, because multiple 1s appear within the range of 7 bytes after the 1, Bitmaps including the 7 bytes of which values are 1s in the TIM are copied into the block bitmap of the basic element, where the length (in bytes) of the block bitmap is indicated by the block length in the basic elements, and the block length of the second basic element is 7 bytes. Then, the above steps are continuously performed to search for the first 1 that appears afterwards, and the above steps are repeated until the searching and encoding of the whole TIM is completed. After the whole TIM is compressed, multiple basic elements are obtained.

Meanwhile, as shown in FIG. 6, the transmitted traffic indication message further includes bit flipping indication information, used for indicating whether bit flipping is performed on the delivery traffic indication bit in the delivery traffic indication message.

The bit flipping is used to invert 1s to 0s and invert 0s to 1s before compression when multiple 1s appear in the TIM, thereby further improving the compression efficiency. The flipping may be performed on the whole TIM before the compression; in this case, the bit flipping indication information needs to be added to the TIM message and may be placed behind the compression method indication information. When a value of the indication information is 0, it indicates that the flipping is not performed; and when the value of the indication information is 1, it indicates that the flipping is performed before the compression. Correspondingly, the flipping may also be used for partial Bitmap compression, and may be indicated by a corresponding indication bit.

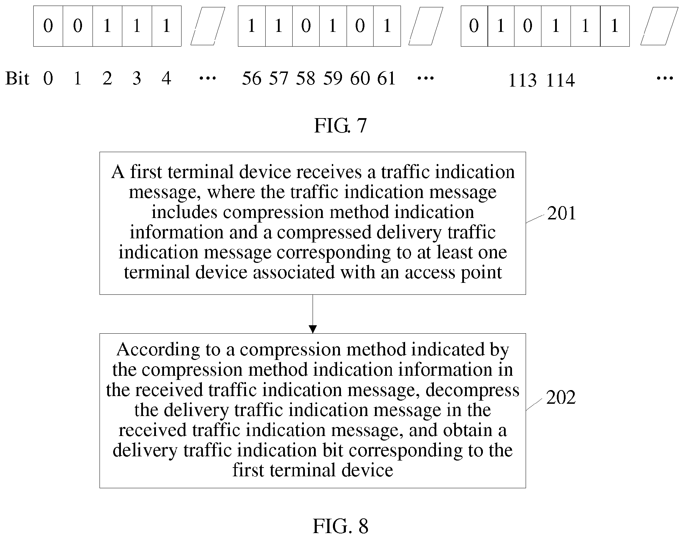

FIG. 7 shows an information situation of the TIM before the bit flipping is performed, and an information situation of the TIM after the bit flipping is performed is shown in FIG. 6.

### Embodiment 2

An embodiment of the present invention provides a method for receiving a traffic indication message. As shown in FIG. 8, operation steps of a terminal device include:
201: A first terminal device receives a traffic indication message, where the traffic indication message includes compression method indication information and a compressed delivery traffic indication message corresponding to at least one terminal device associated with an access point, the compression method indication information is used for indicating a compression method adopted to compress the delivery traffic indication message corresponding to the at least one terminal device, and the delivery traffic indication message indicates, through a delivery traffic indication bit, whether the at least one terminal device has data to receive.
202: According to the compression method indicated by the compression method indication information in the received traffic indication message, decompress the delivery traffic indication message in the received traffic indication message, and obtain the delivery traffic indication bit corresponding to the first terminal device.

In the method for receiving a traffic indication message provided by this embodiment of the present invention, the terminal device receives the traffic indication message, decompresses a delivery traffic indication message corresponding to the terminal device in the received traffic indication message, and obtains the delivery traffic indication bit corresponding to the terminal device, thereby solving the problem that the TIM message is too long, reducing the length of a Beacon frame, and increasing the transmission efficiency.

In specific application, according to the compression method indication information in the received traffic indication message, decompression is performed on the delivery traffic indication message in the received traffic indication message, that is, a bitmap of the delivery traffic indication bit is decoded.

When a compression algorithm indicated by the compression method indication information is shown in FIG. 6. According to FIG. 6, decompression is performed on the delivery traffic indication message corresponding to the terminal device in the received traffic indication message, that is, the bitmap of the delivery traffic indication bit is decoded.

Meanwhile, according to bit flipping indication information in the received traffic indication message, it is learned that whether bit flipping needs to be performed on the delivery traffic indication bit in the delivery traffic indication message.

As shown in FIG. 6, when the bit flipping indication information is 1, bit flipping is performed on the obtained Bitmap after the decompression is performed on the received delivery traffic indication message according to the compression algorithm indicated by the compression method indication information, so as to invert 1s to 0s and invert 0s to 1s, and thereby corresponding delivery traffic indication information is obtained.

### Embodiment 3

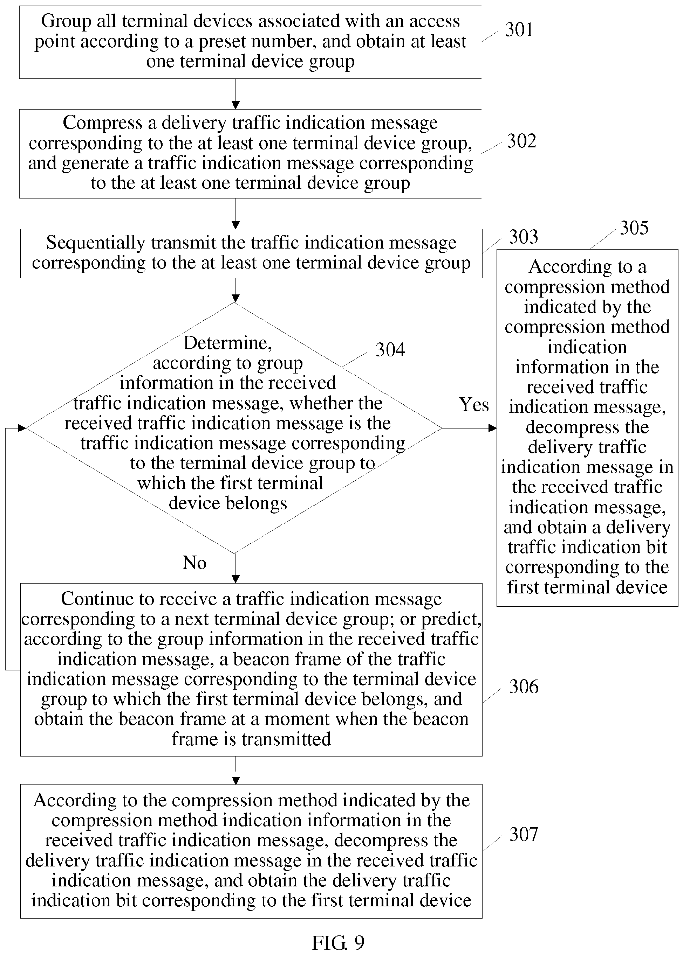

An embodiment of the present invention provides a method for transmitting a traffic indication message. As shown in FIG. 9, specific steps are as follows:
301: Group all terminal devices associated with an access point according to a preset number, and obtain at least one terminal device group.

The access point groups the terminal devices according to a preset fixed number.

For example, when the preset fixed number is 1500, every 1500 terminal devices form one group; therefore, terminal devices of which association IDs are from 1 to 1500 belong to a first terminal device group, terminal devices of which association IDs are from 1501 to 3000 belong to a second terminal device group, terminal devices of which association IDs are from 3001 to 4500 belong to a third terminal device group, and the rest can be deduced by analogy.

302: Compress a delivery traffic indication message corresponding to the at least one terminal device group, and generate a traffic indication message corresponding to the at least one terminal device group, where the delivery traffic indication message is corresponding to one terminal device in the at least one terminal device group, and the at least one terminal device associated with the access point is specifically any terminal device in the terminal device group corresponding to the traffic indication message.

Different compression methods may be adopted to compress a delivery traffic indication messages corresponding to terminal devices in each terminal device group, and a compression method is indicated by compression method indication information in the traffic indication message corresponding to the terminal device group.

303: Sequentially transmit the traffic indication message corresponding to the at least one terminal device group, where the traffic indication message further includes group information, the group information is group information used for indicating the terminal device group corresponding to the traffic indication message, and the delivery traffic indication message indicates, through a delivery traffic indication bit corresponding to each terminal device in the terminal device group corresponding to the delivery traffic indication message, whether each terminal device in the terminal device group corresponding to the delivery traffic indication message has data to receive.

The access point transmits a traffic indication message corresponding to an i^{th} terminal device group to all the terminal devices which access the access point. The group information in the traffic indication message may include a group period of the terminal device groups, and/or the number of terminals included in each terminal device group, a group index i, compression method indication information, and the compressed delivery traffic indication message corresponding to each terminal device in the terminal device group, where i is a positive integer, and 1≤i≤group period.

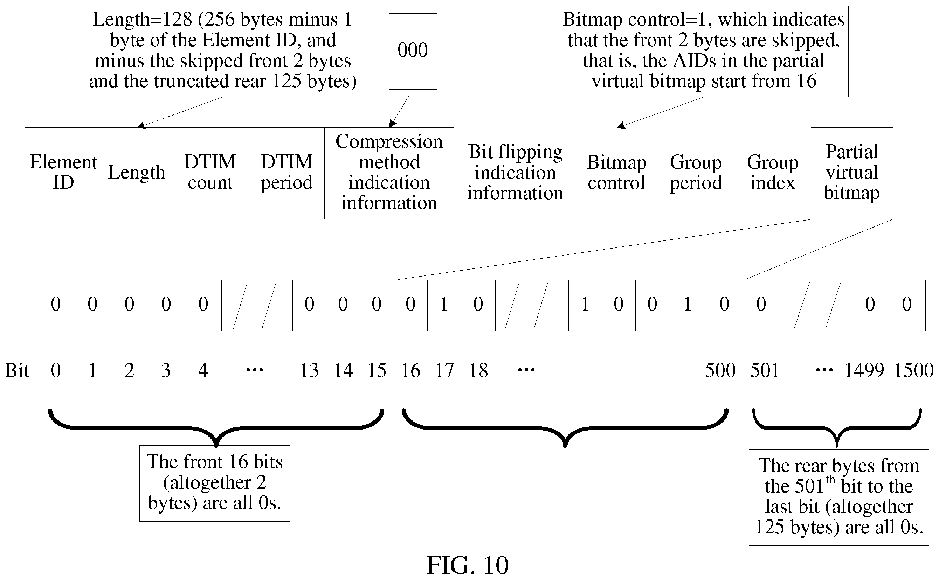

In this case, the traffic indication message corresponding to the terminal device group is GTIM (Group Traffic Indication Message, group traffic indication message). A format of a first type of GTIM message provided by an embodiment of the present invention is shown in FIG. 10. Each GTIM message includes a DTIM message, and newly defined fields in FIG. 10 are as follows:
element ID (Element ID) indicates the type of a message, which is used for indicating that the message is a GTIM message;
message length (Length) indicates the length of a transmitted GTIM message;
compression method indication information (Comp Method) indicates a method for compressing a delivery traffic indication message in a terminal device group;
group period (Group Period) is used for indicating the total number of terminal device groups; and
group index (Group Index) is used for indicating a group serial number of a terminal device group.

The group period and the group index may altogether occupy the first 8 bits (each 4 bits) in an original partial virtual bitmap, and the compression method may occupy 2 or 3 bits in the original partial virtual bitmap; therefore, the partial virtual bitmap in the GTIM is reduced from original 2008 bits to 1998 bits or 1997 bits, that is, the partial virtual bitmap may correspond to 1998 or 1997 terminal devices at most.

When the access point needs to support 6000 terminal devices, the preset fixed number is 1500; therefore, the group period is 4. As the group period is 4, the group index may be 1, 2, 3, or 4.

Because the traffic indication message corresponding to the terminal device group carries the delivery traffic indication message of the terminal device which accesses the access point, in the partial virtual bitmap, each bit is corresponding to a terminal device; when a message needs to be transmitted to a terminal device, a value of an indication bit corresponding to the terminal device is 1; and when no message needs to be transmitted to the terminal device, the indication bit is 0. When plenty of 0s exist, a great number of bits are wasted. An existing compression method is adopted to compress the delivery traffic indication message of each terminal device.

For example, when the compression method indication information takes up 3 bits, a compression method indicated by 000 is shown in FIG. 10; in the partial virtual bitmap, the first 16 bits (altogether 2 bytes) are all 0s, and the rear bytes from the 501^{th} bit to the last bit (altogether 125 bytes) are all 0s; therefore, B7 in the Bitmap Control field is 1, which indicates that 2 bytes are skipped, that is, AIDs in the partial virtual bitmap start from 16. The Length field is 128, because 256 bytes minus 1 byte of the Element ID is 255 bytes, and 255 bytes minus the skipped first 2 bytes and the truncated rear 125 bytes is 128 bytes. When the compression method is adopted, in a situation that a bit corresponding to AID1 is 1, a bit corresponding to AID2007 is also 1, and bits corresponding to all AIDs between AID1 and AID2007 are all 0s, a beneficial effect of compression cannot be achieved.

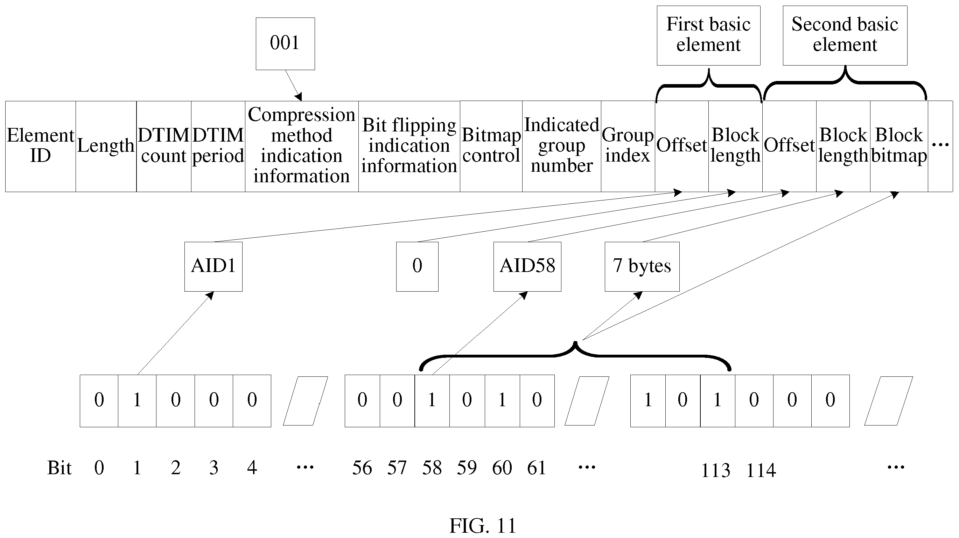

In response to the above situation, a multi-block compression method algorithm may be adopted. As shown in FIG. 11, at this time, the compression method indication bit information is 001, and the 7 bits in the Bitmap Control field and the partial virtual bitmap are replaced by the block basic elements shown in FIG. 6.

The traffic indication message corresponding to the terminal device group may include a plurality of the above basic elements, and the sizes of the basic elements are not fixed.

In addition, there may be other compression methods, which may provide different compression effects in different distribution situations of 0s and 1s in the delivery traffic indication messages corresponding to the terminal devices in each terminal device group. Therefore, in order to increase the compression efficiency, different compression methods may be adopted for different terminal device groups, so as to achieve the best compression effect.

Meanwhile, as shown in FIG. 10 and FIG. 11, the transmitted traffic indication message corresponding to the terminal device group further includes bit flipping indication information, used for indicating whether bit flipping is performed on the delivery traffic indication bit in the delivery traffic indication message.

Beacon frames transmitted by the access point sequentially carry traffic indication messages corresponding to three terminal device groups in an order of group indexes of the terminal device groups, and the beacon frame transmitted each time carries a traffic indication message corresponding to one terminal device group.

304: Determine, according to the group information in the received traffic indication message, whether the received traffic indication message is the traffic indication message corresponding to the terminal device group to which the first terminal device belongs.

The first terminal device receives the traffic indication message corresponding to the i^{th} terminal device group and transmitted by the access point. As described above, the group information in the traffic indication message may include a group period of the terminal device groups, and/or the number of terminal devices in each group, a group index i, compression method indication information, and the compressed delivery traffic indication message corresponding to each terminal device in the terminal device group, where i is a positive integer, and 1≤i≤group period.

It is determined whether the group index of the group to which the first terminal device belongs is equal to the group index of the i^{th} terminal device group.

A group index of a terminal device group to which a terminal device belongs may be obtained by: dividing an association ID of the terminal device by a preset fixed number to obtain a quotient, rounding the quotient to obtain an integer, and adding 1 to the integer.

For example, the association ID of the first terminal device is 14, and the preset fixed number is 1500; therefore, the group index of the group to which the first terminal device belongs is [14/2000]+1, that is, the group index of the group, to which the first terminal device with the association ID being 14 belongs, is 1.

305: When it is determined that the traffic indication message received by the first terminal device is the traffic indication message corresponding to the terminal device group to which the first terminal device belongs, according to the compression method indicated by the compression method indication information in the received traffic indication message, decompress the delivery traffic indication message in the received traffic indication message, and obtain the delivery traffic indication bit corresponding to the first terminal device.

When the group index of the group to which the first terminal device belongs is equal to the group index of the i^{th} terminal device group, the delivery traffic indication message corresponding to the terminal device in the i^{th} terminal device group is obtained.

For example, when the group index of the group, to which the first terminal device with the association ID being 14 belongs, is 1, and the received traffic indication message is a traffic indication message corresponding to the first terminal device group, the terminal device obtains the delivery traffic indication message corresponding to the terminal device from the first terminal device group among the received terminal device groups.

306: When it is determined, according to the group information in the received traffic indication message, that the received traffic indication message is not the traffic indication message corresponding to the terminal device group to which the first terminal device belongs, continue to receive a traffic indication message corresponding to a next terminal device group; or predict, according to the group information in the received traffic indication message, a beacon frame of the traffic indication message corresponding to the terminal device group to which the first terminal device belongs, and obtain the beacon frame at the moment when the beacon frame is sent.

When the group index of the group to which the first terminal device belongs is not equal to the group index of the ith terminal device group, the first terminal device continues to receive a next beacon frame, where the next beacon frame includes a traffic indication message corresponding to an (i+1)th terminal device group; or when the group index of the group to which the first terminal device belongs is not equal to the group index of the ith terminal device group, the first terminal device predicts, according to the group period of the received terminal device groups, a beacon frame of the traffic indication message corresponding to the terminal device group to which the first terminal device belongs, and obtains the beacon frame at the moment when the beacon frame is sent.

For example, when the group index of the group, to which the first terminal device with the association ID being 4500 belongs, is 3, and the received traffic indication message is a traffic indication message corresponding to the first terminal device group, the first terminal device is not in the received terminal device group. The first terminal device continues to receive a next beacon frame and executes step 304;
or when the first terminal device receives the first terminal device group and a group period 4, the first terminal device may learn that the traffic indication message corresponding to the terminal device group to which the first terminal device belongs can be obtained from the third beacon frame to be transmitted later, so that the first terminal device does not need to wait to receive every beacon frame. In this way, energy saving of the terminal device is further implemented.

307: According to the compression method indicated by the compression method indication information in the received traffic indication message, decompress the delivery traffic indication message in the received traffic indication message, and obtain the delivery traffic indication bit corresponding to the first terminal device.

As shown in FIG. 10, when the AID of the first terminal device is 14, and the compression method indication bit received by the first terminal device is 000, according to an indication of B1-B7 in the Bitmap Control field, it is learned that the first 16 bits in the partial virtual bitmap are all 0s, which indicates that the access point has no indication message to transmit to the first terminal device; therefore, the first terminal device does not perform any operation on the received traffic indication message corresponding to the terminal device group to which the first terminal device belongs.

As shown in FIG. 11, when the AID of the first terminal device is 14, and the compression method indication bit received by the first terminal device is 001, the first terminal device obtains, from a first block information basic element in the received traffic indication message corresponding to the terminal device group, an offset 1 and a block length 0, which indicates that the access point has no indication message to transmit to the first terminal device of which the AID is 14; therefore, the first terminal device does not perform any operation on the received traffic indication message.

When the AID of the first terminal device is 1, and the compression method indication bit received by the first terminal device is 001, the first terminal device obtains, from the first block information basic element in the received traffic indication message corresponding to the terminal device group, an offset 1, which indicates that the access point has an indication message to transmit to the first terminal device of which the AID is 1; therefore, the first terminal device obtains the corresponding delivery traffic indication message.

In addition, there may be other compression methods, which may provide different compression effects in different distribution situations of 0s and 1s in the delivery traffic indication messages corresponding to the terminal devices in each terminal device group. According to different preset compression methods, corresponding decompression operations are performed to obtain the corresponding delivery traffic indication message.

In addition, when the obtained traffic indication message corresponding to the terminal device group to which the terminal device belongs includes bit flipping indication information, and the bit flipping indication information is 1, bit flipping is performed on the Bitmap obtained after the decompression to invert 1s to 0s and invert 0s to 1s, so as to obtain the corresponding delivery traffic indication information, and thereby the delivery traffic indication message of the terminal device is obtained.

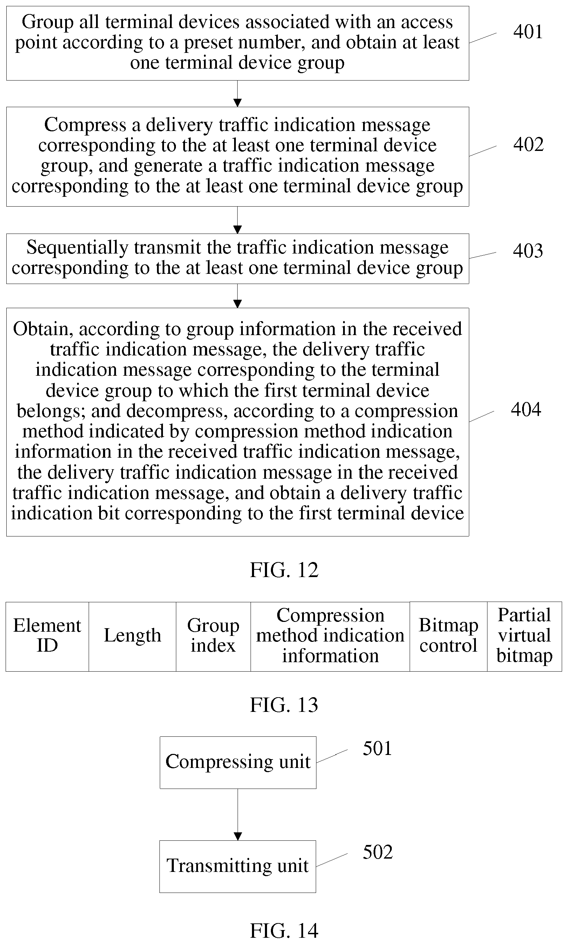

An embodiment of the present invention provides a method for transmitting a traffic indication message. As shown in FIG. 12, specific steps are shown in the following:
401: Group all terminal devices associated with an access point according to a preset number, and obtain at least one terminal device group.

The access point groups the terminal devices according to a preset fixed number.

For example, every 2000 terminal devices form one group; therefore, terminal devices of which association IDs are from 1 to 2000 belong to a first terminal device group, terminal devices of which association IDs are from 2001 to 4000 belong to a second terminal device group, terminal devices of which association IDs are from 4001 to 6000 belong to a third terminal device group, and the rest can be deduced by analogy.

The existing 2007 terminal devices may form the first terminal device group, and terminal devices of which association IDs are greater than 2007 may be grouped according to a preset fixed number.

402: Compress a delivery traffic indication message corresponding to the at least one terminal device group, and generate a traffic indication message corresponding to the at least one terminal device group, where the delivery traffic indication message is corresponding to one terminal device in the at least one terminal device group, and the at least one terminal device associated with the access point is specifically any terminal device in the terminal device group corresponding to the traffic indication message.

Different compression methods may be adopted to compress a delivery traffic indication messages corresponding to terminal devices in each terminal device group, and a compression method is indicated by compression method indication information in the traffic indication message corresponding to the terminal device group.

403: Simultaneously transmit the traffic indication message corresponding to the at least one terminal device group, where the traffic indication message further includes group information, the group information is group information used for indicating the terminal device group corresponding to the traffic indication message, and the delivery traffic indication message indicates, through a delivery traffic indication bit corresponding to each terminal device in the terminal device group corresponding to the delivery traffic indication message, whether each terminal device in the terminal device group corresponding to the delivery traffic indication message has data to receive.

Specifically, traffic indication messages corresponding to all terminal device groups are included. When the first terminal device group includes the original 2007 terminal devices, the original TIM message format is adopted to transmit the traffic indication message corresponding to the terminal device group.

When the access point needs to support 6000 terminal devices, for terminal devices of which AIDs are greater than 2007, when the preset fixed number is 1999, these terminal devices are grouped and each group includes 1999 terminal devices, that is, terminal devices with AIDs from 2008 to 4007 form a group, and terminal devices with AIDs from 4008 to 6000 form another group. In this case, a second GTIM message format is adopted, and as shown in FIG. 13, newly defined fields are as follows:
element ID (Element ID) indicates the type of a message, which is used for indicating that the message is a GTIM message;
message length (Length) indicates the length of a transmitted GTIM message;
group index (Group Index) is used for indicating a group serial number of a terminal device group and takes up 8 bits;
compression method (Comp Method) indicates a method for compressing a traffic indication message in a terminal device group, and the compression method takes up 2 or 3 bits in a partial virtual bitmap; and
partial virtual bitmap (Partial Virtual Bitmap) supports at most 2014 or 2015 terminal devices.

Therefore, a beacon frame transmitted by the access point carries the original TIM message as well as a GTIM1 message and a GTIM2 message, where the group indexes of the GTIM1 message and the GTIM2 message are 1 and 2, respectively.

For the partial virtual bitmap in each GTIM message, when the delivery traffic indication bit corresponding to each terminal device is 0, the GTIM message may not be sent.

Meanwhile, according to the indication of the compression method indication information, for example, the method shown in FIG. 10 or FIG. 11, the terminal device group may compress the delivery traffic indication message corresponding to each terminal device in the traffic indication message corresponding to the terminal device group.

In addition, there may be other compression methods, which may provide different compression effects in different distribution situations of 0s and 1s in the delivery traffic indication messages corresponding to the terminal devices in each terminal device group. Therefore, in order to increase the compression efficiency, different compression methods may be adopted for different terminal device groups, so as to achieve the best compression effect.

Meanwhile, as shown in FIG. 10 and FIG. 11, the transmitted traffic indication message corresponding to the terminal device group further includes bit flipping indication information, used for indicating whether bit flipping is performed on the delivery traffic indication bit in the delivery traffic indication message.

404: When the traffic indication message received by the first terminal device is a traffic indication message corresponding to at least two terminal device groups, obtain, according to the group information in the received traffic indication message, the delivery traffic indication message corresponding to the terminal device group to which the first terminal device belongs; and decompress, according to the compression method indicated by the compression method indication information in the received traffic indication message, the delivery traffic indication message in the received traffic indication message, and obtain the delivery traffic indication bit corresponding to the first terminal device.

For example, the traffic indication message corresponding to the terminal device group to which the terminal device belongs is obtained according to the association ID and the group index of the terminal device group.

The terminal device obtains the delivery traffic indication message corresponding to the terminal device from the decompressed delivery traffic indication messages corresponding to the terminal devices.

For a terminal device of which an association ID is greater than 2007, a group index of a terminal device group to which the terminal device belongs may be obtained by: subtracting 2007 from the association ID of the terminal device to obtain a value, dividing the obtained value by 1999 to obtain a quotient, rounding the quotient to obtain an integer, and adding 1 to the integer.

When the traffic indication message corresponding to the terminal device group to which the terminal device belongs is obtained, a corresponding decompression operation is performed according to the obtained compression method as shown in FIG. 10 or FIG. 11.

In addition, when the obtained traffic indication message corresponding to the terminal device group to which the terminal device belongs includes bit flipping indication information, and the bit flipping indication information is 1, bit flipping is performed on the Bitmap obtained after the decompression to invert 1s to 0s and invert 0s to 1s, so as to obtain the corresponding delivery traffic indication information, and thereby the delivery traffic indication message of the terminal device is obtained.

When the terminal device does not find the terminal device group to which the terminal device belongs in the received beacon frame, which indicates that the terminal devices in the group do not have data to transmit, the terminal device does not have data to receive.

### Embodiment 4

An embodiment of the present invention provides an access point. As shown in FIG. 14, the access point includes a compressing unit 501 and a transmitting unit 502, where
the compressing unit 501 is configured to compress a delivery traffic indication message and generate a traffic indication message, where the delivery traffic indication message is used for indicating whether at least one terminal device associated with an access point has data to receive, and the delivery traffic indication message indicates, through a delivery traffic indication bit corresponding to the at least one terminal device, whether the at least one terminal device has data to receive; and
the transmitting unit 502 is configured to transmit the traffic indication message, where the traffic indication message includes compression method indication information and the compressed delivery traffic indication message, and the compression method indication information is used for indicating a compression method adopted to compress the delivery traffic indication message.

In an embodiment, the compressing unit is specifically configured to encode a bitmap of the delivery traffic indication bit.

In an embodiment, the traffic indication message transmitted by the transmitting unit further includes bit flipping indication information, used for indicating whether bit flipping is performed on the delivery traffic indication bit in the delivery traffic indication message.

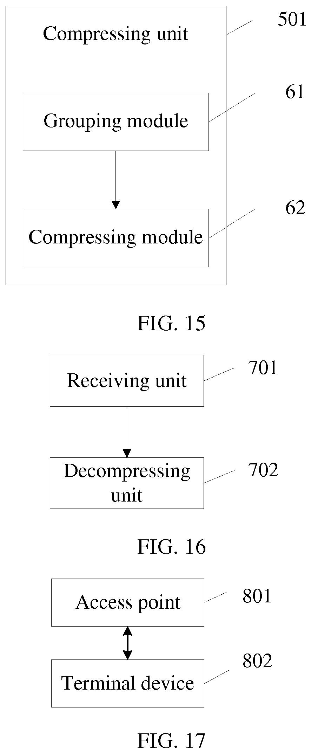

In an embodiment, as shown in FIG. 15, the compressing unit further includes:
a grouping module 61, configured to group all the terminal devices associated with the access point according to a preset number and obtain at least one terminal device group;
a compressing module 62, configured to compress the delivery traffic indication message corresponding to the at least one terminal device group, and generate the traffic indication message corresponding to the at least one terminal device group, where the delivery traffic indication message is corresponding to one terminal device in the at least one terminal device group, and the at least one terminal device associated with the access point is specifically any terminal device in the terminal device group corresponding to the traffic indication message.

At this time, the transmitting unit is specifically configured to:
transmit the traffic indication message corresponding to the at least one terminal device group, where the traffic indication message further includes group information, the group information is group information used for indicating the terminal device group corresponding to the traffic indication message, and the delivery traffic indication message indicates, through the delivery traffic indication bit corresponding to each terminal device in the terminal device group corresponding to the delivery traffic indication message, whether each terminal device in the terminal device group corresponding to the delivery traffic indication message has data to receive.

The transmitting unit is configured to sequentially transmit the traffic indication message corresponding to the at least one terminal device group; or
simultaneously transmit the traffic indication message corresponding to the at least one terminal device group.

An embodiment of the present invention provides a terminal device. As shown in FIG. 16, the terminal device includes a receiving unit 701 and a decompressing unit 702, where
the receiving unit 701 is configured to receive a traffic indication message, where the traffic indication message includes compression method indication information and a compressed delivery traffic indication message corresponding to at least one terminal device associated with an access point, the compression method indication information is used for indicating a compression method adopted to compress the delivery traffic indication message corresponding to the at least one terminal device, and the delivery traffic indication message indicates, through a delivery traffic indication bit, whether the at least one terminal device has data to receive; and
the decompressing unit 702 is configured to decompress, according to the compression method indicated by the compression method indication information in the received traffic indication message, the delivery traffic indication message in the received traffic indication message, and obtain the delivery traffic indication bit corresponding to the terminal device.

In an embodiment, the decompressing unit is specifically configured to decode a bitmap of the delivery traffic indication bit.

In an embodiment, the traffic indication message received by the receiving unit further includes bit flipping indication information, used for indicating whether bit flipping is performed on the delivery traffic indication bit in the delivery traffic indication message.

The traffic indication message received by the receiving unit may further include group information of the terminal device group. The group information is group information used for indicating the terminal device group, and the traffic indication message is corresponding to the terminal device group. The at least one terminal device associated with the access point is specifically any terminal device in the terminal device group corresponding to the traffic indication message.

In an embodiment, the receiving unit is specifically configured to:
when the traffic indication message received by the receiving unit is a traffic indication message corresponding to one terminal device group, determine, according to the group information in the received traffic indication message, whether the received traffic indication message is the traffic indication message corresponding to the terminal device group to which the terminal device belongs;
when it is determined that the traffic indication message received by the receiving unit is the traffic indication message corresponding to the terminal device group to which the terminal device belongs, decompress, according to the compression method indicated by the compression method indication information in the received traffic indication message, the delivery traffic indication message in the received traffic indication message; or
when it is determined, according to the group information in the received traffic indication message, that the traffic indication message received by the receiving unit is not the traffic indication message corresponding to the terminal device group to which the terminal device belongs, continue to receive a traffic indication message corresponding to a next terminal device group; or predict, according to the group information in the received traffic indication message, a beacon frame of the traffic indication message corresponding to the terminal device group to which the terminal device belongs, and obtain the beacon frame at the moment when the beacon frame is sent.

In an embodiment, the receiving unit is specifically configured to:
when the traffic indication message received by the receiving unit is the traffic indication message corresponding to at least two terminal device groups, obtain, according to the group information in the received traffic indication message, the delivery traffic indication message corresponding to the terminal device group to which the terminal device belongs; and decompress, according to the compression method indicated by the compression method indication information in the received traffic indication message, the delivery traffic indication message in the received traffic indication message.

An embodiment of the present invention provides a system for transmitting a traffic indication message. As shown in FIG. 17, the system includes an access point 801 and a terminal device 802, where
the access point 801 may be the access point composed of the compressing unit 501 and the transmitting unit 502 shown in FIG. 14, or
composed of the compressing unit including the grouping module 61 and the compressing module 62 shown in FIG. 15 and the transmitting unit 502 shown in FIG. 14; and
the terminal device 802 may be the terminal device composed of the receiving unit 701 and the decompressing unit 702 shown in FIG. 16.

In the apparatus and system for transmitting a traffic indication message provided by the embodiments of the present invention, the access point groups the terminal devices to obtain the at least one terminal device group, compresses, according to the preset compression method, the delivery traffic indication message corresponding to each terminal device in the traffic indication message corresponding to the terminal device group, and transmits the traffic indication message which includes the compressed delivery traffic indication message, where the adopted transmitting manner includes: sequentially transmitting the traffic indication message corresponding to the at least one terminal device group or simultaneously transmitting the traffic indication message corresponding to the at least one terminal device group. In this way, when a single AP supports more than 2007 STAs, a problem that a TIM message is too long is solved, the TIM message is effectively compressed, and the length of the TIM message is reduced; therefore, the length of a beacon frame is reduced, and the transmission efficiency is increased.

The above method, apparatus, and system are more applicable to application scenarios where the number of terminal devices such as smart meters and M2M (Machine to Machine, machine to machine) is large and the amount of data is small, so that a single AP supports more terminal devices in these application scenarios.

Apparently, a person skilled in the art should understand that the units or steps in the present invention may be implemented by a universal computing apparatus. The units or steps may be integrated in a single computing apparatus, or may be distributed in a network composed of multiple computing apparatuses. Optionally, the units or steps may be implemented through program code which is executable to a computing apparatus, so that the units or steps may be stored in a storage device (such as a magnetic disk, an optical disc, a read-only memory, a random access memory, or a flash memory) to be executed by a computing apparatus. Alternatively, the units or steps may be respectively made into multiple circuit modules, or multiple units or steps in the units or steps may be made into a single circuit module so as to be implemented. Therefore, the present invention is not limited to any particular combination of hardware and software.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for transmitting a traffic indication message, comprising:
compressing (101) a delivery traffic indication message, and generating a traffic indication message, wherein the delivery traffic indication message is used for indicating whether at least one terminal device associated with an access point has data to receive, and the delivery traffic indication message indicates, through a delivery traffic indication bit corresponding to the at least one terminal device, whether the at least one terminal device has data to receive; and
**characterized by** further comprising:
transmitting (102) the traffic indication message, wherein the traffic indication message comprises compression method indication information and the compressed delivery traffic indication message, and the compression method indication information is used for indicating a compression method adopted to compress the delivery traffic indication message.

2. The method according to claim 1, wherein the compressing the delivery traffic indication message specifically comprises encoding a bitmap of the delivery traffic indication bit.

3. The method according to claim 1 or 2, wherein the traffic indication message further comprises bit inverting indication information, used for indicating whether bit inverting is performed on the delivery traffic indication bit in the delivery traffic indication message.

4. The method according to any one of claims 1 to 3, wherein the compressing (101) the delivery traffic indication message and generating the traffic indication message specifically comprise:
grouping (301) all terminal devices associated with the access point according to a preset number, and obtaining at least one terminal device group;
compressing (302) the delivery traffic indication message corresponding to the at least one terminal device group, and generating (302) the traffic indication message corresponding to the at least one terminal device group, wherein the delivery traffic indication message is corresponding to one terminal device in the at least one terminal device group, and the at least one terminal device associated with the access point is specifically any terminal device in the terminal device group corresponding to the traffic indication message; and
the transmitting (102) the traffic indication message specifically comprises:
transmitting the traffic indication message corresponding to the at least one terminal device group, wherein the traffic indication message further comprises group information, the group information is group information used for indicating the terminal device group corresponding to the traffic indication message, and the delivery traffic indication message indicates, through a delivery traffic indication bit corresponding to each terminal device in the terminal device group corresponding to the delivery traffic indication message, whether each terminal device in the terminal device group corresponding to the delivery traffic indication message has data to receive.

5. The method according to claim 4, wherein the transmitting the traffic indication message corresponding to the at least one terminal device group comprises:
sequentially transmitting (303) the traffic indication message corresponding to the at least one terminal device group; or
simultaneously transmitting the traffic indication message corresponding to the at least one terminal device group.

6. A method for receiving a traffic indication message, comprising:
receiving (201), by a first terminal device, a traffic indication message, wherein the traffic indication message comprises compression method indication information and a compressed delivery traffic indication message corresponding to at least one terminal device associated with an access point, the compression method indication information is used for indicating a compression method adopted to compress the delivery traffic indication message corresponding to the at least one terminal device, and the delivery traffic indication message indicates, through a delivery traffic indication bit, whether the at least one terminal device has data to receive; and
**characterized by** further comprising:
decompressing (202), according to the compression method indicated by the compression method indication information in the received traffic indication message, the delivery traffic indication message in the received traffic indication message, and obtaining the delivery traffic indication bit corresponding to the first terminal device.

7. The method according to claim 6, wherein the decompressing (202), according to the compression method indicated by the compression method indication information in the received traffic indication message, the delivery traffic indication message in the received traffic indication message specifically comprises decoding a bitmap of the delivery traffic indication bit.

8. The method according to claim 6 or 7, wherein the traffic indication message further comprises bit inverting indication information, used for indicating whether bit inverting is performed on the delivery traffic indication bit in the delivery traffic indication message.

9. The method according to any one of claims 6 to 8, wherein the traffic indication message further comprises group information of a terminal device group, the group information is group information used for indicating the terminal device group, the traffic indication message is corresponding to the terminal device group, and the at least one terminal device associated with the access point is specifically any terminal device in the terminal device group corresponding to the traffic indication message.

10. The method according to claim 9, wherein the decompressing (202), according to the compression method indicated by the compression method indication information in the received traffic indication message, the delivery traffic indication message in the received traffic indication message comprises:
when the traffic indication message received by the first terminal device is a traffic indication message corresponding to one terminal device group, determining (304), according to the group information in the received traffic indication message, whether the received traffic indication message is the traffic indication message corresponding to the terminal device group to which the first terminal device belongs;
when it is determined that the traffic indication message received by the first terminal device is the traffic indication message corresponding to the terminal device group to which the first terminal device belongs, decompressing (305), according to the compression method indicated by the compression method indication information in the received traffic indication message, the delivery traffic indication message in the received traffic indication message; and
when it is determined, according to the group information in the received traffic indication message, that the received traffic indication message is not the traffic indication message corresponding to the terminal device group to which the first terminal device belongs, continuing (306) to receive a traffic indication message corresponding to a next terminal device group; or predicting (306), according to the group information in the received traffic indication message, a beacon frame of the traffic indication message corresponding to the terminal device group to which the first terminal device belongs, and obtaining the beacon frame at the moment when the beacon frame is sent.

11. The method according to claim 9, wherein the decompressing (305), according to the compression method indicated by the compression method indication information in the received traffic indication message, the delivery traffic indication message in the received traffic indication message comprises:
when the traffic indication message received by the first terminal device is a traffic indication message corresponding to at least two terminal device groups, obtaining, according to the group information in the received traffic indication message, the delivery traffic indication message corresponding to the terminal device group to which the first terminal device belongs; and decompressing, according to the compression method indicated by the compression method indication information in the received traffic indication message, the delivery traffic indication message in the received traffic indication message.

12. An access point (801), comprising:
a compressing unit (501), configured to compress a delivery traffic indication message and generate a traffic indication message, wherein the delivery traffic indication message is used for indicating whether at least one terminal device associated with the access point has data to receive, and the delivery traffic indication message indicates, through a delivery traffic indication bit corresponding to the at least one terminal device, whether the at least one terminal device has data to receive; and
**characterized by** further comprising:
a transmitting unit (502), configured to transmit the traffic indication message, wherein the traffic indication message comprises compression method indication information and the compressed delivery traffic indication message, and the compression method indication information is used for indicating a compression method adopted to compress the delivery traffic indication message.

13. The access point (801) according to claim 12, wherein the compressing unit (501) is specifically configured to encode a bitmap of the delivery traffic indication bit.

14. The access point (801) according to claim 12 or 13, wherein the traffic indication message transmitted by the transmitting unit (502) further comprises bit inverting indication information, used for indicating whether bit inverting is performed on the delivery traffic indication bit in the delivery traffic indication message.

15. The access point (801) according to any one of claims 12 to 14, wherein
the compressing unit (501) comprises:
a grouping module, configured to group all terminal devices associated with the access point according to a preset number and obtain at least one terminal device group; and
a compressing module (61), configured to compress the delivery traffic indication message corresponding to the at least one terminal device group, and generate the traffic indication message corresponding to the at least one terminal device group, wherein the delivery traffic indication message is corresponding to one terminal device in the at least one terminal device group, and the at least one terminal device associated with the access point is specifically any terminal device in the terminal device group corresponding to the traffic indication message; and
the transmitting unit (502) is specifically configured to transmit the traffic indication message corresponding to the at least one terminal device group, wherein the traffic indication message further comprises group information, the group information is group information used for indicating the terminal device group corresponding to the traffic indication message, and the delivery traffic indication message indicates, through the delivery traffic indication bit corresponding to each terminal device in the terminal device group corresponding to the delivery traffic indication message, whether each terminal device in the terminal device group corresponding to the delivery traffic indication message has data to receive.

16. The access point (801) according to claim 15, wherein the transmitting unit (502) is specifically configured to sequentially transmit the traffic indication message corresponding to the at least one terminal device group; or
the transmitting unit (502) is specifically configured to simultaneously transmit the traffic indication message corresponding to the at least one terminal device group.

17. A terminal device (802), comprising:
a receiving unit (701), configured to receive a traffic indication message, wherein the traffic indication message comprises compression method indication information and a compressed delivery traffic indication message corresponding to at least one terminal device associated with an access point, the compression method indication information is used for indicating a compression method adopted to compress the delivery traffic indication message corresponding to the at least one terminal device, and the delivery traffic indication message indicates, through a delivery traffic indication bit, whether the at least one terminal device has data to receive; and
**characterized by** further comprising:
a decompressing unit (702), configured to decompress, according to the compression method indicated by the compression method indication information in the received traffic indication message, the delivery traffic indication message in the received traffic indication message, and obtain the delivery traffic indication bit corresponding to the terminal device.

18. The terminal device (802) according to claim 17, wherein the decompressing unit (702) is specifically configured to decode a bitmap of the delivery traffic indication bit.

19. The terminal device (802) according to claim 17 or 18, wherein the traffic indication message received by the receiving unit (701) further comprises bit inverting indication information, used for indicating whether bit inverting is performed on the delivery traffic indication bit in the delivery traffic indication message.

20. The terminal device (802) according to any one of claims 17 to 19, wherein the traffic indication message received by the receiving unit (701) further comprises group information of a terminal device group, the group information is group information used for indicating the terminal device group, the traffic indication message is corresponding to the terminal device group, and the at least one terminal device associated with the access point is specifically any terminal device in the terminal device group corresponding to the traffic indication message.

21. The terminal device (802) according to claim 20, wherein the decompressing unit (702) is specifically configured to:
when the traffic indication message received by the receiving unit (701) is a traffic indication message corresponding to one terminal device group, determine, according to the group information in the received traffic indication message, whether the received traffic indication message is the traffic indication message corresponding to the terminal device group to which the terminal device belongs;
when it is determined that the traffic indication message received by the receiving unit (701) is the traffic indication message corresponding to the terminal device group to which the terminal device belongs, decompress, according to the compression method indicated by the compression method indication information in the received traffic indication message, the delivery traffic indication message in the received traffic indication message; or
when it is determined, according to the group information in the received traffic indication message, that the traffic indication message received by the receiving unit (701) is not the traffic indication message corresponding to the terminal device group to which the terminal device belongs, continue to receive a traffic indication message corresponding to a next terminal device group; or predict, according to the group information in the received traffic indication message, a beacon frame of the traffic indication message corresponding to the terminal device group to which the terminal device belongs, and obtain the beacon frame at the moment when the beacon frame is sent.

22. The terminal device (802) according to claim 20, wherein the decompressing unit (702) is specifically configured to:
when the traffic indication message received by the receiving unit (701) is a traffic indication message corresponding to at least two terminal device groups, obtain, according to the group information in the received traffic indication message, the delivery traffic indication message corresponding to the terminal device group to which the terminal device belongs; and decompress, according to the compression method indicated by the compression method indication information in the received traffic indication message, the delivery traffic indication message in the received traffic indication message.

23. A system for transmitting a traffic indication message, comprising the access point (801) according to claims 12 to 16 and the terminal device (802) according to claims 17 to 22.

## Patentansprüche

1. Verfahren zum Übertragen einer Verkehrsanzeigenachricht, das Folgendes umfasst:
Komprimieren (101) einer Übermittlungsverkehrsanzeigenachricht und Generieren einer Verkehrsanzeigenachricht, wobei die Übermittlungsverkehrsanzeigenachricht genutzt wird, um anzuzeigen, ob mindestens ein mit einem Zugangspunkt assoziiertes Endgerät zu empfangende Daten aufweist, und die Übermittlungsverkehrsanzeigenachricht durch ein mit dem mindestens einen Endgerät korrespondierendes Übermittlungsverkehrsanzeigebit anzeigt, ob das mindestens eine Endgerät zu empfangende Daten aufweist; und
**dadurch gekennzeichnet, dass** es ferner Folgendes umfasst:
Übertragen (102) der Verkehrsanzeigenachricht, wobei die Verkehrsanzeigenachricht Komprimierungsverfahrensanzeige-Informationen und die komprimierte Übermittlungsverkehrsanzeigenachricht umfasst und die Komprimierungsverfahrensanzeige-Informationen genutzt werden, um ein Komprimierungsverfahren, das zum Komprimieren der Übermittlungsverkehrsanzeigenachricht eingesetzt wird, anzuzeigen.

2. Verfahren nach Anspruch 1, wobei das Komprimieren der Übermittlungsverkehrsanzeigenachricht speziell Codieren eines Bitmusters des Übermittlungsverkehrsanzeigebits umfasst.

3. Verfahren nach Anspruch 1 oder 2, wobei die Verkehrsanzeigenachricht ferner Bitinvertierungsanzeige-Informationen umfasst, die genutzt werden, um anzuzeigen, ob eine Bitinvertierung am Übermittlungsverkehrsanzeigebit in der Übermittlungsverkehrsanzeigenachricht durchgeführt wird.

4. Verfahren nach einem der Ansprüche 1 bis 3, wobei das Komprimieren (101) der Übermittlungsverkehrsanzeigenachricht und das Generieren der Verkehrsanzeigenachricht speziell Folgendes umfassen:
Gruppieren (301) aller mit dem Zugangspunkt assoziierten Endgeräte gemäß einer vorgegebenen Zahl und Erhalten mindestens einer Endgerätgruppe;
Komprimieren (302) der mit der mindestens einen Endgerätgruppe korrespondierenden Übermittlungsverkehrsanzeigenachricht und Generieren (302) der mit der mindestens einen Endgerätgruppe korrespondierenden Verkehrsanzeigenachricht, wobei die Übermittlungsverkehrsanzeigenachricht mit einem Endgerät in der mindestens einen Endgerätgruppe korrespondiert und das mindestens eine mit dem Zugangspunkt assoziierte Endgerät speziell irgendein Endgerät in der mit der Verkehrsanzeigenachricht korrespondierenden Endgerätgruppe ist; und
das Übertragen (102) der Verkehrsanzeigenachricht speziell Folgendes umfasst:
Übertragen der mit der mindestens einen Endgerätgruppe korrespondierenden Verkehrsanzeigenachricht, wobei die Verkehrsanzeigenachricht ferner Gruppeninformationen umfasst, die Gruppeninformationen Gruppeninformationen sind, die genutzt werden, um die mit der Verkehrsanzeigenachricht korrespondierende Endgerätgruppe anzuzeigen, und die Übermittlungsverkehrsanzeigenachricht durch ein Übermittlungsverkehrsanzeigebit, das mit jedem Endgerät in der mit der Übermittlungsverkehrsanzeigenachricht korrespondierenden Endgerätgruppe korrespondiert, anzeigt, ob jedes Endgerät in der mit der Übermittlungsverkehrsanzeigenachricht korrespondierenden Endgerätgruppe zu empfangende Daten aufweist.

5. Verfahren nach Anspruch 4, wobei das Übertragen der mit der mindestens einen Endgerätgruppe korrespondierenden Verkehrsanzeigenachricht Folgendes umfasst:
sequenzielles Übertragen (303) der mit der mindestens einen Endgerätgruppe korrespondierenden Verkehrsanzeigenachricht; oder
gleichzeitiges Übertragen der mit der mindestens einen Endgerätgruppe korrespondierenden Verkehrsanzeigenachricht.

6. Verfahren zum Empfangen einer Verkehrsanzeigenachricht, das Folgendes umfasst:
Empfangen (201) einer Verkehrsanzeigenachricht durch ein erstes Endgerät, wobei die Verkehrsanzeigenachricht Komprimierungsverfahrensanzeige-Informationen und eine komprimierte Übermittlungsverkehrsanzeigenachricht, die mit mindestens einem mit einem Zugangspunkt assoziierten Endgerät korrespondiert, umfasst, die Komprimierungsverfahrensanzeige-Informationen genutzt werden, um ein Komprimierungsverfahren, das zum Komprimieren der mit dem mindestens einen Endgerät korrespondierenden Übermittlungsverkehrsanzeigenachricht eingesetzt wird, anzuzeigen, und die Übermittlungsverkehrsanzeigenachricht durch ein Übermittlungsverkehrsanzeigebit anzeigt, ob das mindestens eine Endgerät zu empfangende Daten aufweist; und
**dadurch gekennzeichnet, dass** es ferner Folgendes umfasst:
Dekomprimieren (202) der Übermittlungsverkehrsanzeigenachricht in der empfangenen Verkehrsanzeigenachricht gemäß dem durch die Komprimierungsverfahrensanzeige-Informationen in der empfangenen Verkehrsanzeigenachricht angezeigten Komprimierungsverfahren und Erhalten des mit dem ersten Endgerät korrespondierenden Übermittlungsverkehrsanzeigebits.

7. Verfahren nach Anspruch 6, wobei das Dekomprimieren (202) der Übermittlungsverkehrsanzeigenachricht in der empfangenen Verkehrsanzeigenachricht gemäß dem durch die Komprimierungsverfahrensanzeige-Informationen in der empfangenen Verkehrsanzeigenachricht angezeigten Komprimierungsverfahren speziell Decodieren eines Bitmusters des Übermittlungsverkehrsanzeigebits umfasst.

8. Verfahren nach Anspruch 6 oder 7, wobei die Verkehrsanzeigenachricht ferner Bitinvertierungsanzeige-Informationen umfasst, die genutzt werden, um anzuzeigen, ob eine Bitinvertierung am Übermittlungsverkehrsanzeigebit in der Übermittlungsverkehrsanzeigenachricht durchgeführt wird.

9. Verfahren nach einem der Ansprüche 6 bis 8, wobei die Verkehrsanzeigenachricht ferner Gruppeninformationen einer Endgerätgruppe umfasst, die Gruppeninformationen Gruppeninformationen sind, die genutzt werden, um die Endgerätgruppe anzuzeigen, die Verkehrsanzeigenachricht mit der Endgerätgruppe korrespondiert und das mindestens eine mit dem Zugangspunkt assoziierte Endgerät speziell irgendein Endgerät in der mit der Verkehrsanzeigenachricht korrespondierenden Endgerätgruppe ist.

10. Verfahren nach Anspruch 9, wobei das Dekomprimieren (202) der Übermittlungsverkehrsanzeigenachricht in der empfangenen Verkehrsanzeigenachricht gemäß dem durch die Komprimierungsverfahrensanzeige-Informationen in der empfangenen Verkehrsanzeigenachricht angezeigten Komprimierungsverfahren Folgendes umfasst:
wenn die durch das erste Endgerät empfangene Verkehrsanzeigenachricht eine mit einer Endgerätgruppe korrespondierende Verkehrsanzeigenachricht ist, Bestimmen (304) gemäß den Gruppeninformationen in der empfangenen Verkehrsanzeigenachricht, ob die empfangene Verkehrsanzeigenachricht die Verkehrsanzeigenachricht ist, die mit der Endgerätgruppe korrespondiert, zu der das erste Endgerät gehört;
wenn bestimmt wird, dass die durch das erste Endgerät empfangene Verkehrsanzeigenachricht die Verkehrsanzeigenachricht ist, die mit der Endgerätgruppe korrespondiert, zu der das erste Endgerät gehört, Dekomprimieren (305) der Übermittlungsverkehrsanzeigenachricht in der empfangenen Verkehrsanzeigenachricht gemäß dem durch die Komprimierungsverfahrensanzeige-Informationen in der empfangenen Verkehrsanzeigenachricht angezeigten Komprimierungsverfahren; und,
wenn gemäß den Gruppeninformationen in der empfangenen Verkehrsanzeigenachricht bestimmt wird, dass die empfangene Verkehrsanzeigenachricht nicht die Verkehrsanzeigenachricht ist, die mit der Endgerätgruppe korrespondiert, zu der das erste Endgerät gehört, Fortfahren (306) mit dem Empfangen einer mit einer nächsten Endgerätgruppe korrespondierenden Verkehrsanzeigenachricht; oder Vorhersagen (306) eines "Beacon Frame" der Verkehrsanzeigenachricht, die mit der Endgerätgruppe korrespondiert, zu der das erste Endgerät gehört, gemäß den Gruppeninformationen in der empfangenen Verkehrsanzeigenachricht und Erhalten des "Beacon Frame" zu dem Zeitpunkt, zu dem der "Beacon Frame" gesendet wird.

11. Verfahren nach Anspruch 9, wobei das Dekomprimieren (305) der Übermittlungsverkehrsanzeigenachricht in der empfangenen Verkehrsanzeigenachricht gemäß dem durch die Komprimierungsverfahrensanzeige-Informationen in der empfangenen Verkehrsanzeigenachricht angezeigten Komprimierungsverfahren Folgendes umfasst:
wenn die durch das erste Endgerät empfangene Verkehrsanzeigenachricht eine mit mindestens zwei Endgerätgruppen korrespondierende Verkehrsanzeigenachricht ist, Erhalten der Übermittlungsverkehrsanzeigenachricht, die mit der Endgerätgruppe korrespondiert, zu der das erste Endgerät gehört, gemäß den Gruppeninformationen in der empfangenen Verkehrsanzeigenachricht; und Dekomprimieren der Übermittlungsverkehrsanzeigenachricht in der empfangenen Verkehrsanzeigenachricht gemäß dem durch die Komprimierungsverfahrensanzeige-Informationen in der empfangenen Verkehrsanzeigenachricht angezeigten Komprimierungsverfahren.

12. Zugangspunkt (801), der Folgendes umfasst:
eine Komprimierungseinheit (501), die konfiguriert ist, eine Übermittlungsverkehrsanzeigenachricht zu komprimieren und eine Verkehrsanzeigenachricht zu generieren, wobei die Übermittlungsverkehrsanzeigenachricht genutzt wird, um anzuzeigen, ob mindestens ein mit dem Zugangspunkt assoziiertes Endgerät zu empfangende Daten aufweist, und die Übermittlungsverkehrsanzeigenachricht durch ein mit dem mindestens einen Endgerät korrespondierendes Übermittlungsverkehrsanzeigebit anzeigt, ob das mindestens eine Endgerät zu empfangende Daten aufweist; und
**dadurch gekennzeichnet, dass** er ferner Folgendes umfasst:
eine Übertragungseinheit (502), die konfiguriert ist, die Verkehrsanzeigenachricht zu übertragen, wobei die Verkehrsanzeigenachricht Komprimierungsverfahrensanzeige-Informationen und die komprimierte Übermittlungsverkehrsanzeigenachricht umfasst und die Komprimierungsverfahrensanzeige-Informationen genutzt werden, um ein Komprimierungsverfahren, das zum Komprimieren der Übermittlungsverkehrsanzeigenachricht eingesetzt wird, anzuzeigen.

13. Zugangspunkt (801) nach Anspruch 12, wobei die Komprimierungseinheit (501) speziell konfiguriert ist, ein Bitmuster des Übermittlungsverkehrsanzeigebits zu codieren.

14. Zugangspunkt (801) nach Anspruch 12 oder 13, wobei die durch die Übertragungseinheit (502) übertragene Verkehrsanzeigenachricht ferner Bitinvertierungsanzeige-Informationen umfasst, die genutzt werden, um anzuzeigen, ob eine Bitinvertierung am Übermittlungsverkehrsanzeigebit in der Übermittlungsverkehrsanzeigenachricht durchgeführt wird.

15. Zugangspunkt (801) nach einem der Ansprüche 12 bis 14, wobei die Komprimierungseinheit (501) Folgendes umfasst:
ein Gruppierungsmodul, das konfiguriert ist, alle mit dem Zugangspunkt assoziierten Endgeräte gemäß einer vorgegebenen Zahl zu gruppieren und mindestens eine Endgerätgruppe zu erhalten; und
ein Komprimierungsmodul (61), das konfiguriert ist, die mit der mindestens einen Endgerätgruppe korrespondierende Übermittlungsverkehrsanzeigenachricht zu komprimieren und die mit der mindestens einen Endgerätgruppe korrespondierende Verkehrsanzeigenachricht zu generieren, wobei die Übermittlungsverkehrsanzeigenachricht mit einem Endgerät in der mindestens einen Endgerätgruppe korrespondiert und das mindestens eine mit dem Zugangspunkt assoziierte Endgerät speziell irgendein Endgerät in der mit der Verkehrsanzeigenachricht korrespondierenden Endgerätgruppe ist; und
die Übertragungseinheit (502) speziell konfiguriert ist, die mit der mindestens einen Endgerätgruppe korrespondierende Verkehrsanzeigenachricht zu übertragen, wobei die Verkehrsanzeigenachricht ferner Gruppeninformationen umfasst, die Gruppeninformationen Gruppeninformationen sind, die genutzt werden, um die mit der Verkehrsanzeigenachricht korrespondierende Endgerätgruppe anzuzeigen, und
die Übermittlungsverkehrsanzeigenachricht durch das Übermittlungsverkehrsanzeigebit, das mit jedem Endgerät in der mit der Übermittlungsverkehrsanzeigenachricht korrespondierenden Endgerätgruppe korrespondiert, anzeigt, ob jedes Endgerät in der mit der Übermittlungsverkehrsanzeigenachricht korrespondierenden Endgerätgruppe zu empfangende Daten aufweist.

16. Zugangspunkt (801) nach Anspruch 15, wobei die Übertragungseinheit (502) speziell konfiguriert ist, die mit der mindestens einen Endgerätgruppe korrespondierende Verkehrsanzeigenachricht sequenziell zu übertragen; oder
die Übertragungseinheit (502) speziell konfiguriert ist, die mit der mindestens einen Endgerätgruppe korrespondierende Verkehrsanzeigenachricht gleichzeitig zu übertragen.

17. Endgerät (802), das Folgendes umfasst:
eine Empfangseinheit (701), die konfiguriert ist, eine Verkehrsanzeigenachricht zu empfangen, wobei die Verkehrsanzeigenachricht Komprimierungsverfahrensanzeige-Informationen und eine komprimierte Übermittlungsverkehrsanzeigenachricht, die mit mindestens einem mit einem Zugangspunkt assoziierten Endgerät korrespondiert, umfasst, die Komprimierungsverfahrensanzeige-Informationen genutzt werden, um ein Komprimierungsverfahren, das zum Komprimieren der mit dem mindestens einen Endgerät korrespondierenden Übermittlungsverkehrsanzeigenachricht eingesetzt wird, anzuzeigen, und die Übermittlungsverkehrsanzeigenachricht durch ein Übermittlungsverkehrsanzeigebit anzeigt, ob das mindestens eine Endgerät zu empfangende Daten aufweist; und
**dadurch gekennzeichnet, dass** es ferner Folgendes umfasst:
eine Dekomprimierungseinheit (702), die konfiguriert ist, gemäß dem durch die Komprimierungsverfahrensanzeige-Informationen in der empfangenen Verkehrsanzeigenachricht angezeigten Komprimierungsverfahren die Übermittlungsverkehrsanzeigenachricht in der empfangenen Verkehrsanzeigenachricht zu dekomprimieren und das mit dem Endgerät korrespondierende Übermittlungsverkehrsanzeigebit zu erhalten.

18. Endgerät (802) nach Anspruch 17, wobei die Dekomprimierungseinheit (702) speziell konfiguriert ist, ein Bitmuster des Übermittlungsverkehrsanzeigebits zu decodieren.

19. Endgerät (802) nach Anspruch 17 oder 18, wobei die durch die Empfangseinheit (701) empfangene Verkehrsanzeigenachricht ferner Bitinvertierungsanzeige-Informationen umfasst, die genutzt werden, um anzuzeigen, ob eine Bitinvertierung am Übermittlungsverkehrsanzeigebit in der Übermittlungsverkehrsanzeigenachricht durchgeführt wird.

20. Endgerät (802) nach einem der Ansprüche 17 bis 19, wobei die durch die Empfangseinheit (701) empfangene Verkehrsanzeigenachricht ferner Gruppeninformationen einer Endgerätgruppe umfasst, die Gruppeninformationen Gruppeninformationen sind, die genutzt werden, um die Endgerätgruppe anzuzeigen, die Verkehrsanzeigenachricht mit der Endgerätgruppe korrespondiert und das mindestens eine mit dem Zugangspunkt assoziierte Endgerät speziell irgendein Endgerät in der mit der Verkehrsanzeigenachricht korrespondierenden Endgerätgruppe ist.

21. Endgerät (802) nach Anspruch 20, wobei die Dekomprimierungseinheit (702) speziell konfiguriert ist:
wenn die durch die Empfangseinheit (701) empfangene Verkehrsanzeigenachricht eine mit einer Endgerätgruppe korrespondierende Verkehrsanzeigenachricht ist, gemäß den Gruppeninformationen in der empfangenen Verkehrsanzeigenachricht zu bestimmen, ob die empfangene Verkehrsanzeigenachricht die Verkehrsanzeigenachricht ist, die mit der Endgerätgruppe korrespondiert, zu der das Endgerät gehört;
wenn bestimmt wird, dass die durch die Empfangseinheit (701) empfangene Verkehrsanzeigenachricht die Verkehrsanzeigenachricht ist, die mit der Endgerätgruppe korrespondiert, zu der das Endgerät gehört, die Übermittlungsverkehrsanzeigenachricht in der empfangenen Verkehrsanzeigenachricht gemäß dem durch die Komprimierungsverfahrensanzeige-Informationen in der empfangenen Verkehrsanzeigenachricht angezeigten Komprimierungsverfahren zu dekomprimieren; oder
wenn gemäß den Gruppeninformationen in der empfangenen Verkehrsanzeigenachricht bestimmt wird, dass die durch die Empfangseinheit (701) empfangene Verkehrsanzeigenachricht nicht die Verkehrsanzeigenachricht ist, die mit der Endgerätgruppe korrespondiert, zu der das Endgerät gehört, mit dem Empfangen einer mit einer nächsten Endgerätgruppe korrespondierenden Verkehrsanzeigenachricht fortzufahren; oder gemäß den Gruppeninformationen in der empfangenen Verkehrsanzeigenachricht einen "Beacon Frame" der Verkehrsanzeigenachricht, die mit der Endgerätgruppe korrespondiert, zu der das Endgerät gehört, vorherzusagen und den "Beacon Frame" zu dem Zeitpunkt, zu dem der "Beacon Frame" gesendet wird, zu erhalten.

22. Endgerät (802) nach Anspruch 20, wobei die Dekomprimierungseinheit (702) speziell konfiguriert ist:
wenn die durch die Empfangseinheit (701) empfangene Verkehrsanzeigenachricht eine mit mindestens zwei Endgerätgruppen korrespondierende Verkehrsanzeigenachricht ist, die Übermittlungsverkehrsanzeigenachricht, die mit der Endgerätgruppe korrespondiert, zu der das Endgerät gehört, gemäß den Gruppeninformationen in der empfangenen Verkehrsanzeigenachricht zu erhalten;
und die Übermittlungsverkehrsanzeigenachricht in der empfangenen Verkehrsanzeigenachricht gemäß dem durch die Komprimierungsverfahrensanzeige-Informationen in der empfangenen Verkehrsanzeigenachricht angezeigten Komprimierungsverfahren zu dekomprimieren.

23. System zum Übertragen einer Verkehrsanzeigenachricht, das den Zugangspunkt (801) nach den Ansprüchen 12 bis 16 und das Endgerät (802) nach den Ansprüchen 17 bis 22 umfasst.

## Revendications

1. Procédé destiné à transmettre un message d'indication de trafic, comprenant :
la compression (101) d'un message d'indication de trafic de livraison, et la génération d'un message d'indication de trafic, dans lequel le message d'indication de trafic de livraison est utilisé pour indiquer si au moins un dispositif terminal associé à un point d'accès doit recevoir des données, et le message d'indication de trafic de livraison indique, par l'intermédiaire d'un bit d'indication de trafic de livraison correspondant audit au moins un dispositif terminal, si ledit au moins un dispositif terminal doit recevoir des données ; et
**caractérisé en ce qu'**il comprend en outre :
la transmission (102) du message d'indication de trafic, dans lequel le message d'indication de trafic comprend des informations d'indication de procédé de compression et le message d'indication de trafic de livraison comprimé, et les informations d'indication de procédé de compression sont utilisées pour indiquer un procédé de compression adopté pour comprimer le message d'indication de trafic de livraison.

2. Procédé selon la revendication 1, dans lequel la compression du message d'indication de trafic de livraison comprend plus précisément le codage d'une topographie binaire du bit d'indication de trafic de livraison.

3. Procédé selon la revendication 1 ou 2, dans lequel le message d'indication de trafic comprend en outre des informations d'indication d'inversion de bit, utilisées pour indiquer si une inversion de bit est effectuée sur le bit d'indication de trafic de livraison dans le message d'indication de trafic de livraison.

4. Procédé selon l'une quelconque des revendications 1 à 3, dans lequel la compression (101) du message d'indication de trafic de livraison et la génération du message d'indication de trafic comprennent plus précisément :
le regroupement (301) de tous les dispositifs terminaux associés au point d'accès conformément à un nombre prédéfini, et l'obtention d'au moins un groupe de dispositifs terminaux ;
la compression (302) du message d'indication de trafic de livraison correspondant audit au moins un groupe de dispositifs terminaux, et la génération (302) du message d'indication de trafic correspondant audit au moins un groupe de dispositifs terminaux, dans lequel le message d'indication de trafic de livraison correspond à un dispositif terminal dans ledit au moins un groupe de dispositifs terminaux, et ledit au moins un dispositif terminal associé au point d'accès est plus précisément un dispositif terminal quelconque dans le groupe de dispositifs terminaux correspondant au message d'indication de trafic ; et
la transmission (102) du message d'indication de trafic comprend plus précisément :
la transmission du message d'indication de trafic correspondant audit au moins un groupe de dispositifs terminaux, dans lequel le message d'indication de trafic comprend en outre des informations de groupe, les informations de groupe sont des informations de groupe utilisées pour indiquer le groupe de dispositifs terminaux correspondant au message d'indication de trafic, et le message d'indication de trafic de livraison indique, par l'intermédiaire d'un bit d'indication de trafic de livraison correspondant à chaque dispositif terminal du groupe de dispositifs terminaux correspondant au message d'indication de trafic de livraison, si chaque dispositif terminal du groupe de dispositifs terminaux correspondant au message d'indication de trafic de livraison doit recevoir des données.

5. Procédé selon la revendication 4, dans lequel la transmission du message d'indication de trafic correspondant audit au moins un groupe de dispositifs terminaux comprend :
la transmission séquentielle (303) du message d'indication de trafic correspondant audit au moins un groupe de dispositifs terminaux ; ou
la transmission simultanée du message d'indication de trafic correspondant audit au moins un groupe de dispositifs terminaux.

6. Procédé destiné à recevoir un message d'indication de trafic, comprenant :
la réception (201), par un premier dispositif terminal, d'un message d'indication de trafic, dans lequel le message d'indication de trafic comprend des informations d'indication de procédé de compression et un message d'indication de trafic de livraison comprimé correspondant à au moins un dispositif terminal associé à un point d'accès, les informations d'indication de procédé de compression sont utilisées pour indiquer un procédé de compression adopté pour comprimer le message d'indication de trafic de livraison correspondant audit au moins un dispositif terminal, et le message d'indication de trafic de livraison indique, par l'intermédiaire d'un bit d'indication de trafic de livraison, si ledit au moins un dispositif terminal doit recevoir des données ; et
**caractérisé en ce qu'**il comprend en outre :
la décompression (202), conformément au procédé de compression indiqué par les informations d'indication de procédé de compression contenues dans le message d'indication de trafic reçu, du message d'indication de trafic de livraison dans le message d'indication de trafic reçu, et l'obtention du bit d'indication de trafic de livraison correspondant au premier dispositif terminal.

7. Procédé selon la revendication 6, dans lequel la décompression (202), conformément au procédé de compression indiqué par les informations d'indication de procédé de compression contenues dans le message d'indication de trafic reçu, du message d'indication de trafic de livraison dans le message d'indication de trafic reçu comprend plus précisément le décodage d'une topographie binaire du bit d'indication de trafic de livraison.

8. Procédé selon la revendication 6 ou 7, dans lequel le message d'indication de trafic comprend en outre des informations d'indication d'inversion de bit, utilisées pour indiquer si une inversion de bit est effectuée sur le bit d'indication de trafic de livraison dans le message d'indication de trafic de livraison.

9. Procédé selon l'une quelconque des revendications 6 à 8, dans lequel le message d'indication de trafic comprend en outre des informations de groupe d'un groupe de dispositifs terminaux, les informations de groupe sont des informations de groupe utilisées pour indiquer le groupe de dispositifs terminaux, le message d'indication de trafic correspond au groupe de dispositifs terminaux, et ledit au moins un dispositif terminal associé au point d'accès est plus précisément un dispositif terminal quelconque dans le groupe de dispositifs terminaux correspondant au message d'indication de trafic.

10. Procédé selon la revendication 9, dans lequel la décompression (202), conformément au procédé de compression indiqué par les informations d'indication de procédé de compression contenues dans le message d'indication de trafic reçu, du message d'indication de trafic de livraison dans le message d'indication de trafic reçu comprend :
lorsque le message d'indication de trafic reçu par le premier dispositif terminal est un message d'indication de trafic correspondant à un groupe de dispositifs terminaux, la détermination (304), conformément aux informations de groupe contenues dans le message d'indication de trafic reçu, du fait de savoir si le message d'indication de trafic reçu est le message d'indication de trafic correspondant au groupe de dispositifs terminaux auquel appartient le premier dispositif terminal ;
lorsqu'il est déterminé que le message d'indication de trafic reçu par le premier dispositif terminal est le message d'indication de trafic correspondant au groupe de dispositifs terminaux auquel appartient le premier dispositif terminal, la décompression (305), conformément au procédé de compression indiqué par les informations d'indication de procédé de compression contenues dans le message d'indication de trafic reçu, du message d'indication de trafic de livraison dans le message d'indication de trafic reçu ; et
lorsqu'il est déterminé, conformément aux informations de groupe contenues dans le message d'indication de trafic reçu, que le message d'indication de trafic reçu n'est pas le message d'indication de trafic correspondant au groupe de dispositifs terminaux auquel appartient le premier dispositif terminal, la poursuite (306) de la réception d'un message d'indication de trafic correspondant à un groupe de dispositifs terminaux suivant ; ou
la prédiction (306), conformément aux informations de groupe contenues dans le message d'indication de trafic reçu, d'une trame balise du message d'indication de trafic correspondant au groupe de dispositifs terminaux auquel appartient le premier dispositif terminal, et l'obtention de la trame balise au moment où la trame balise est envoyée.

11. Procédé selon la revendication 9, dans lequel la décompression (305), conformément au procédé de compression indiqué par les informations d'indication de procédé de compression contenues dans le message d'indication de trafic reçu, du message d'indication de trafic de livraison dans le message d'indication de trafic reçu comprend :
lorsque le message d'indication de trafic reçu par le premier dispositif terminal est un message d'indication de trafic correspondant à au moins deux groupes de dispositifs terminaux, l'obtention, conformément aux informations de groupe contenues dans le message d'indication de trafic reçu, du message d'indication de trafic de livraison correspondant au groupe de dispositifs terminaux auquel appartient le premier dispositif terminal ; et
la décompression, conformément au procédé de compression indiqué par les informations d'indication de procédé de compression contenues dans le message d'indication de trafic reçu, du message d'indication de trafic de livraison dans le message d'indication de trafic reçu.

12. Point d'accès (801), comprenant :
une unité de compression (501), configurée pour comprimer un message d'indication de trafic de livraison et générer un message d'indication de trafic, dans lequel le message d'indication de trafic de livraison est utilisé pour indiquer si au moins un dispositif terminal associé au point d'accès doit recevoir des données, et le message d'indication de trafic de livraison indique, par l'intermédiaire d'un bit d'indication de trafic de livraison correspondant audit au moins un dispositif terminal, si ledit au moins un dispositif terminal doit recevoir des données ; et
**caractérisé en ce qu'**il comprend en outre :
une unité de transmission (502), configurée pour transmettre le message d'indication de trafic, dans lequel le message d'indication de trafic comprend des informations d'indication de procédé de compression et le message d'indication de trafic de livraison comprimé, et les informations d'indication de procédé de compression sont utilisées pour indiquer un procédé de compression adopté pour comprimer le message d'indication de trafic de livraison.

13. Point d'accès (801) selon la revendication 12, dans lequel l'unité de compression (501) est plus précisément configurée pour coder une topographie binaire du bit d'indication de trafic de livraison.

14. Point d'accès (801) selon la revendication 12 ou 13, dans lequel le message d'indication de trafic transmis par l'unité de transmission (502) comprend en outre des informations d'indication d'inversion de bit, utilisées pour indiquer si une inversion de bit est effectuée sur le bit d'indication de trafic de livraison dans le message d'indication de trafic de livraison.

15. Point d'accès (801) selon l'une quelconque des revendications 12 à 14, dans lequel l'unité de compression (501) comprend :
un module de regroupement, configuré pour regrouper tous les dispositifs terminaux associés au point d'accès conformément à un nombre prédéfini et l'obtention d'au moins un groupe de dispositifs terminaux ; et
un module de compression (61), configuré pour comprimer le message d'indication de trafic de livraison correspondant audit au moins un groupe de dispositifs terminaux, et générer le message d'indication de trafic correspondant audit au moins un groupe de dispositifs terminaux, dans lequel le message d'indication de trafic de livraison correspond à un dispositif terminal dans ledit au moins un groupe de dispositifs terminaux, et ledit au moins un dispositif terminal associé au point d'accès est plus précisément un dispositif terminal quelconque dans le groupe de dispositifs terminaux correspondant au message d'indication de trafic ; et
l'unité de transmission (502) est plus précisément configurée pour transmettre le message d'indication de trafic correspondant audit au moins un groupe de dispositifs terminaux, dans lequel le message d'indication de trafic comprend en outre des informations de groupe, les informations de groupe sont des informations de groupe utilisées pour indiquer le groupe de dispositifs terminaux correspondant au message d'indication de trafic, et le message d'indication de trafic de livraison indique, par l'intermédiaire du bit d'indication de trafic de livraison correspondant à chaque dispositif terminal du groupe de dispositifs terminaux correspondant au message d'indication de trafic de livraison, si chaque dispositif terminal du groupe de dispositifs terminaux correspondant au message d'indication de trafic de livraison doit recevoir des données.

16. Point d'accès (801) selon la revendication 15, dans lequel l'unité de transmission (502) est plus précisément configurée pour transmettre séquentiellement le message d'indication de trafic correspondant audit au moins un groupe de dispositifs terminaux ; ou
l'unité de transmission (502) est plus précisément configurée pour transmettre simultanément le message d'indication de trafic correspondant audit au moins un groupe de dispositifs terminaux.

17. Dispositif terminal (802), comprenant :
une unité de réception (701), configurée pour recevoir un message d'indication de trafic, dans lequel le message d'indication de trafic comprend des informations d'indication de procédé de compression et un message d'indication de trafic de livraison comprimé correspondant à au moins un dispositif terminal associé à un point d'accès, les informations d'indication de procédé de compression sont utilisées pour indiquer un procédé de compression adopté pour comprimer le message d'indication de trafic de livraison correspondant audit au moins un dispositif terminal, et le message d'indication de trafic de livraison indique, par l'intermédiaire d'un bit d'indication de trafic de livraison, si ledit au moins un dispositif terminal doit recevoir des données ; et
**caractérisé en ce qu'**il comprend en outre :
une unité de la décompression (702), configurée pour décomprimer, conformément au procédé de compression indiqué par les informations d'indication de procédé de compression contenues dans le message d'indication de trafic reçu, le message d'indication de trafic de livraison dans le message d'indication de trafic reçu, et obtenir le bit d'indication de trafic de livraison correspondant au dispositif terminal.

18. Dispositif terminal (802) selon la revendication 17, dans lequel l'unité de la décompression (702) est plus précisément configurée pour décoder une topographie binaire du bit d'indication de trafic de livraison.

19. Dispositif terminal (802) selon la revendication 17 ou 18, dans lequel le message d'indication de trafic reçu par l'unité de réception (701) comprend en outre des informations d'indication d'inversion de bit, utilisées pour indiquer si une inversion de bit est effectuée sur le bit d'indication de trafic de livraison dans le message d'indication de trafic de livraison.

20. Dispositif terminal (802) selon l'une quelconque des revendications 17 à 19, dans lequel le message d'indication de trafic reçu par l'unité de réception (701) comprend en outre des informations de groupe d'un groupe de dispositifs terminaux, les informations de groupe sont des informations de groupe utilisées pour indiquer le groupe de dispositifs terminaux, le message d'indication de trafic correspond au groupe de dispositifs terminaux, et ledit au moins un dispositif terminal associé au point d'accès est plus précisément un dispositif terminal quelconque dans le groupe de dispositifs terminaux correspondant au message d'indication de trafic.

21. Dispositif terminal (802) selon la revendication 20, dans lequel l'unité de la décompression (702) est plus précisément configurée pour :
lorsque le message d'indication de trafic reçu par l'unité de réception (701) est un message d'indication de trafic correspondant à un groupe de dispositifs terminaux, déterminer, conformément aux informations de groupe contenues dans le message d'indication de trafic reçu, si le message d'indication de trafic reçu est le message d'indication de trafic correspondant au groupe de dispositifs terminaux auquel appartient le dispositif terminal ;
lorsqu'il est déterminé que le message d'indication de trafic reçu par l'unité de réception (701) est le message d'indication de trafic correspondant au groupe de dispositifs terminaux auquel appartient le dispositif terminal, décomprimer, conformément au procédé de compression indiqué par les informations d'indication de procédé de compression contenues dans le message d'indication de trafic reçu, le message d'indication de trafic de livraison dans le message d'indication de trafic reçu ; ou
lorsqu'il est déterminé, conformément aux informations de groupe contenues dans le message d'indication de trafic reçu, que le message d'indication de trafic reçu par l'unité de réception (701) n'est pas le message d'indication de trafic correspondant au groupe de dispositifs terminaux auquel appartient le dispositif terminal, poursuivre la réception d'un message d'indication de trafic correspondant à un groupe de dispositifs terminaux suivant ; ou
prédire, conformément aux informations de groupe contenues dans le message d'indication de trafic reçu, une trame balise du message d'indication de trafic correspondant au groupe de dispositifs terminaux auquel appartient le dispositif terminal, et obtenir la trame balise au moment où la trame balise est envoyée.

22. Dispositif terminal (802) selon la revendication 20, dans lequel l'unité de la décompression (702) est plus précisément configurée pour :
lorsque le message d'indication de trafic reçu par l'unité de réception (701) est un message d'indication de trafic correspondant à au moins deux groupes de dispositifs terminaux, obtenir, conformément aux informations de groupe contenues dans le message d'indication de trafic reçu, le message d'indication de trafic de livraison correspondant au groupe de dispositifs terminaux auquel appartient le dispositif terminal ; et
décomprimer, conformément au procédé de compression indiqué par les informations d'indication de procédé de compression contenues dans le message d'indication de trafic reçu, le message d'indication de trafic de livraison dans le message d'indication de trafic reçu.

23. Système destiné à transmettre un message d'indication de trafic, comprenant le point d'accès (801) selon les revendications 12 à 16 et le dispositif terminal (802) selon les revendications 17 à 22.
